(19) Europäisches Patentamt
European Patent Office
Office européen des brevets

(11) EP 0 694 550 B1

(12) # EUROPÄISCHE PATENTSCHRIFT

(45) Veröffentlichungstag und Bekanntmachung des Hinweises auf die Patenterteilung:
**08.08.2001 Patentblatt 2001/32**

(51) Int Cl.[7]: **C07F 7/18**, C07F 7/04

(21) Anmeldenummer: **95107099.4**

(22) Anmeldetag: **11.05.1995**

(54) **Hydrolisierbare und polymerisierbare Silane**

Hydrolysable and polymerisable silanes

Silanes hydrolysables et polymerisables

(84) Benannte Vertragsstaaten:
**AT BE CH DE DK FR GB IT LI LU NL SE**

(30) Priorität: **06.07.1994 DE 4423811**

(43) Veröffentlichungstag der Anmeldung:
**31.01.1996 Patentblatt 1996/05**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder: **Wolter, Herbert, Dr.**
**D-97950 Gerchsheim - Grossrinderfeld (DE)**

(56) Entgegenhaltungen:
**EP-A- 0 253 770**
**DE-A- 2 159 991**
**DE-A- 4 125 201**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft hydrolysierbare und polymerisierbare Silane, Verfahren zu deren Herstellung und deren Verwendung zur Herstellung von Kieselsäurepolykondensaten bzw. -heteropolykondensaten sowie zur Herstellung von Polymerisaten bzw. Heteropolymerisaten.

Hydrolysierbare, organisch modifizierte Silane finden eine breite Anwendung z.B. bei der Herstellung von kratzfesten Beschichtungen für die unterschiedlichsten Substrate, von Füllstoffen, von Klebe- und Dichtungsmassen oder von Formkörpern. Dabei werden diese Silane entweder alleine, in Mischungen oder in Gegenwart weiterer hydrolysierbarer und/oder kondensierbarer Komponenten hydrolytisch kondensiert, wobei die endgültige Härtung z.B. thermisch, photochemisch, kovalent-nucleophil oder redoxinduziert erfolgt.

So sind z.B. aus der DE 3407087 C2 kratzfeste Beschichtungen bekannt, die durch hydrolytische Kondensation einer Mischung entstehen, die u.a. aus einer hydrolysierbaren titan- oder zirkonorganischen Verbindung $MR_4$ und aus einem hydrolysierbaren, organofunktionellen Silan $R'_m(R''Y)_nSiX_{(4-m-n)}$ besteht, wobei R z.B. Halogen, Hydroxy, Alkoxy oder Acyloxy bedeutet, R' z.B. Alkyl oder Alkenyl, R'' z.B. Alkylen oder Alkenylen und X einen hydrolysierbaren Rest.

Aus der DE 3536716 A1 sind z.B. Klebe- und Dichtungsmassen bekannt, die erhalten worden sind durch hydrolytische Kondensation eines oder mehrerer Organosilane der allgemeinen Formel $R_mSiX_{4-m}$ und gegebenenfalls einer oder mehrerer der Komponenten $SiX_4$ und/oder $R_n(R''Y)_pSiX_{4-n-p}$, wobei R und R'' z.B. Alkyl, Alkenyl, Aryl, Alkylaryl, Arylalkyl, Alkenylaryl oder Arylalkenyl, X z.B. Wasserstoff, Halogen, Hydroxy, Alkoxy oder Acyloxy bedeutet, und Y z.B. ein Halogen oder eine gegebenenfalls substituierte Amino-, Amid-, Aldehyd-, Alkylcarbonyl-, Carboxy-, Hydroxy-, Mercapto- oder Cyanogruppe darstellt.

Ferner sind handelsübliche Silane mit reaktiven Doppelbindungen bekannt, wie z.B. (Meth)acryloxysilane des folgenden Typs

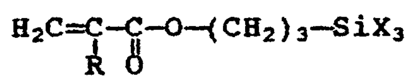

,

wobei R Wasserstoff oder Methyl bedeutet und X z.B. Halogen oder Alkoxy ist. Diese Silane sind hydrolysier- und polymerisierbar und können für die Herstellung der oben genannten Systeme eingesetzt werden. Sie bieten den großen Vorteil, daß die resultierende Beschichtung, die resultierende Füll-, Klebe- oder Dichtungsmasse oder der resultierende Formkörper durch Polymerisation an den reaktiven Doppelbindungen thermisch oder photochemisch gehärtet werden kann.

Nachteilig wirkt sich jedoch bei all diesen Systemen die Tatsache aus, daß bei der Polymerisation eine Volumenabnahme, d.h. ein sog. Härtungsschrumpf auftritt, der dazu führt, daß in der Beschichtung, in der Füll-, Klebe- oder Dichtungsmasse oder in den Formkörpern Spannungen entstehen und/oder die Maßhaftigkeit verloren geht. Die Spannungen können zu makroskopischen Zerstörungen führen, d.h. zu Rissen oder gar zu Abplatzungen, oder zu mikroskopischen Zerstörungen, wie z.B. zu optische Störungen (ortsabhängiger Brechungsindex, Interferrenzen), zu geringeren mechanischen Stabilitäten, zu Oberflächenstrukturen, etc. Der Verlust der Maßhaftigkeit macht sich besonders bei Abformmassen (optische Gitter, etc.) und bei Formkörpern (z.B. beim Spritzguß, etc.) als sehr störend bemerkbar.

Aus der DE 4125201 C1 sind hydrolysierbare und polymerisierbare Silane bekannt, die eine oder mehrere Spirogruppen aufweisen und die alleine oder zusammen mit anderen hydrolysierbaren Komponenten hydrolytisch kondensierbar sind und durch Polymerisation unter Ringöffnung härten. Diese Ringöffnung wirkt zwar einem Härtungsschrumpf entgegen. Trotzdem besteht ein Bedarf für weitere Entwicklungen, um z.B. die biologische Abbaubarkeit zu verbessern.

Aufgabe der vorliegenden Erfindung war es deshalb, neue, organisch modifizierte Silane bereit zu stellen, die hydrolysier- und polymersisierbar sind, die alleine, in Mischungen oder zusammen mit anderen hydrolysier-, kondensier- oder polymerisierbaren Komponenten zu kratzfesten Beschichtungen, zu Füll-, Klebe- oder Dichtungsmassen, zu Formkörpern oder zu Einbettmaterialien verarbeitet werden können, und die zu Beschichtungs-, Füll-, Klebe- oder Dichtungsmassen, zu Formkörpern oder zu Einbettmaterialien führen, die bei der Härtung eine verminderte Volumenabnahme erleiden, die eine gute Substrathaftung aufweisen und die eine verbesserte biologische Abbaubarkeit aufweisen. Diese Silane sollen universell überall dort einsetzbar sein, wo ein reduzierter Härtungsschrumpf gefragt ist, und sie sollen in ein anorganisch-organisches Verbundsystem, d.h. in ein anorganisch-organisches Netzwerk eingebaut werden können. Ferner sollen diese Silane schnell und einfach, d.h. ohne aufwendigen Syntheseprozeß herzustellen sein.

Gelöst wird diese Aufgabe durch hydrolysierbare und polymerisierbare Silane der allgemeinen Formel I,

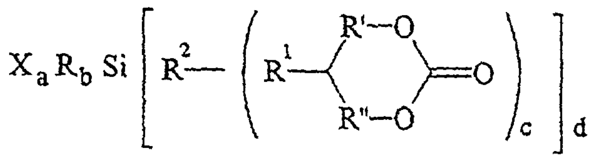

(I)

in der die Reste und Indices gleich oder verschieden sind und folgende Bedeutung haben:

- X = Wasserstoff, Halogen, Hydroxy, Alkoxy, Acyloxy, Alkylcarbonyl, Alkoxycarbonyl oder $NR^3_2$;, mit $R^3$ = Wasserstoff, Alkyl oder Aryl;
- R = Alkyl, Alkenyl, Aryl, Alkylaryl oder Arylalkyl;
- R' = Alkylen, Arylen, Arylenalkylen oder Alkylenarylen mit jeweils 0 bis 10 Kohlenstoffatomen für c+d>2 und mit jeweils 1 bis 10 Kohlenstoffatomen für c+d=2, wobei diese Reste durch Sauerstoff- und Schwefelatome oder durch Amino-Gruppen unterbrochen sein können
- R" = Alkylen, Arylen, Arylenalkylen oder Alkylenarylen mit jeweils 1 bis 10 Kohlenstoffatomen, wobei diese Reste durch Sauerstoff- und Schwefelatome oder durch Aminogruppen unterbrochen sein können;
- $R^1$ = Alkylen, Arylen, Arylenalkylen oder Alkylenarylen mit jeweils 0 bis 10 Kohlenstoffatomen, wobei diese Reste durch Sauerstoff- und Schwefelatome oder durch AminoGruppen unterbrochen sein können
- $R^2$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-bzw. -NH-CO-O-Gruppen unterbrochen sein können
- a = 1, 2 oder 3;
- b = 0, 1 oder 2;
- c = 1, 2, 3, 4, 5 oder 6;
- d = 4 - a - b
- a+b = 1, 2 oder 3.

Die Reste X sind hydrolysierbar und die Einheit mit dem Index c bzw. d ist polymerisierbar.

Die Alkylreste sind z.B. geradkettige, verzweigte oder cyclische Reste mit 1 bis 20, vorzugsweise mit 1 bis 10 Kohlenstoffatomen, und besonders bevorzugt sind niedere Alkylreste mit 1 bis 6 Kohlenstoffatomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit 2 bis 20, vorzugsweise mit 2 bis 10 Kohlenstoffatomen, und besonders bevorzugt sind niedere Alkenylreste mit 2 bis 6 Kohlenstoffatomen, wie z.B. Vinyl, Allyl oder 2-Butenyl.

Bevorzugte Arylreste sind Phenyl, Biphenyl und Naphthyl. Die Alkoxy-, Acyloxy-, Alkylcarbonyl-, Alkoxycarbonyl- und Aminoreste leiten sich vorzugsweise von den oben genannten Alkyl-und Arylresten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$.

Die Alkylen-, Arylen-, Arylenalkylen- oder Alkylenarylenreste leiten sich von den genannten Alkyl-, Aryl-, Arylalkyl- und Alkylarylresten ab.

Unter den Halogenen sind Fluor, Chlor und Brom bevorzugt.

Die Einheit mit dem Index c stellt ein gegebenenfalls substituiertes, cyclisches Carbonat dar, wobei Cyclen mit 5 oder 6 Atomen bevorzugt sind. Es sind aber auch Cyclen mit bis zu 20 oder mehr Atomen möglich.

Die Reste $R^1$, $R^2$ und R' (für c+d > 2) stellen Alkylen-, Arylen-, Arylenalkylen- oder Alkylenarylengruppen mit jeweils 0 bis 10 Kohlenstoffatomen dar, wobei diese Reste durch Sauerstoff- und Schwefelatome oder durch Aminogruppen unterbrochen sein können. Die Reste R' (für c+d = 2) und R" stellen ebenfalls Alkylen-, Arylen-, Arylenalkylen- oder Alkylenarylengruppen mit 1 bis 10 Kohlenstoffatomen dar, die wiederum durch Sauerstoff- und Schwefelatome oder durch Aminogruppen unterbrochen sein können.

Ohne Einschränkung der Allgemeinheit sind folgende Ausgestaltungen der Einheit mit dem Index c bevorzugt:

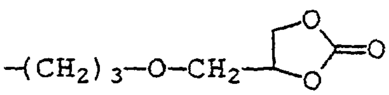, 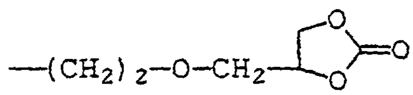, 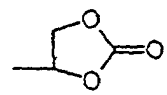,

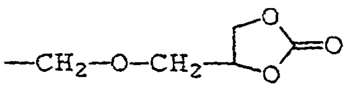, 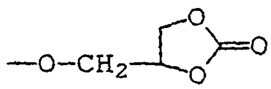, 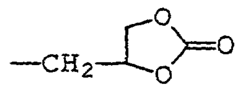,

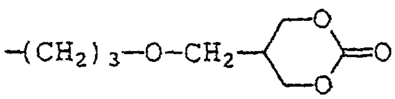, 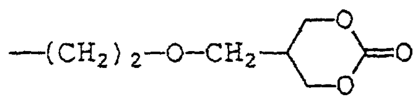, 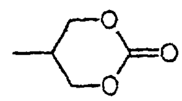,

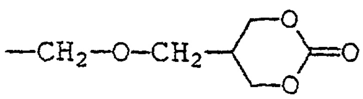, 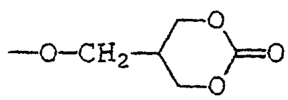, und 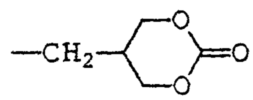.

Ohne Einschränkung der Allgemeinheit sind weitere konkrete Beispiele für Ausgestaltungen der Einheit mit dem Index c:

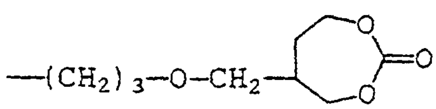, 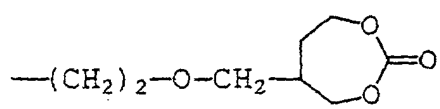,

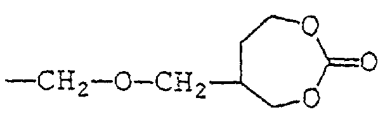, 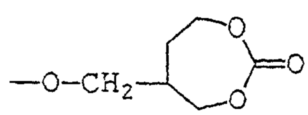, 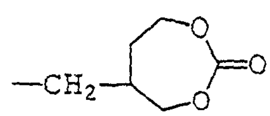,

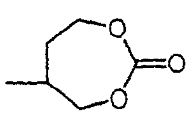, 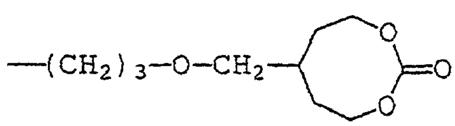, 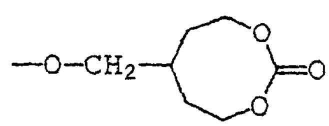,

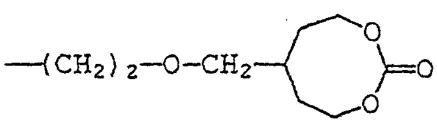, 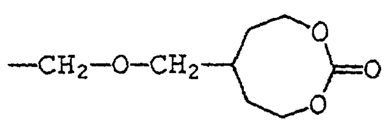, 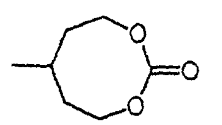,

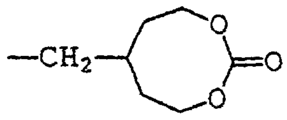 , 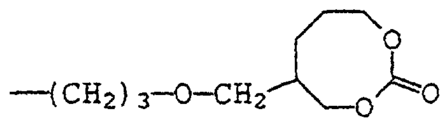 ,

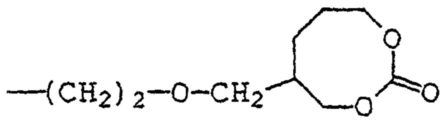 , 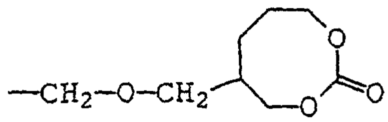 ,

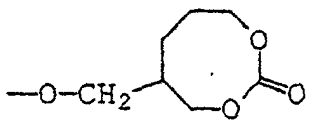 , 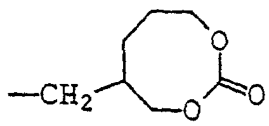 .

Ohne Einschränkung der Allgemeinheit sind konkrete Beispiele der erfindungsgemäßen Silane:

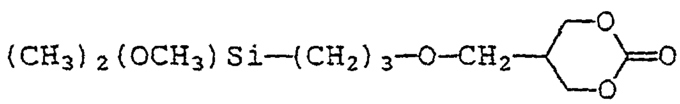
,

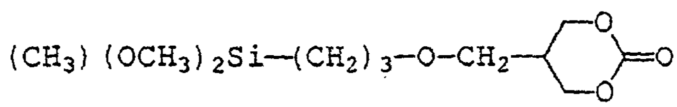
,

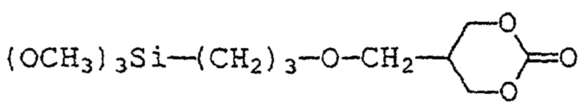
,

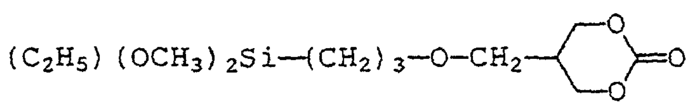
,

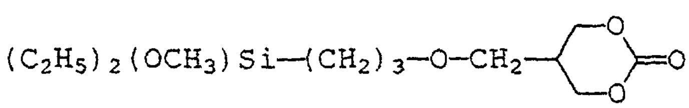
,

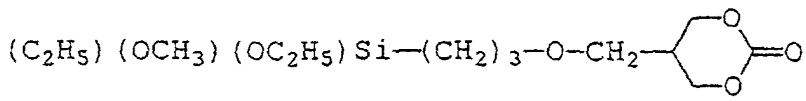
,

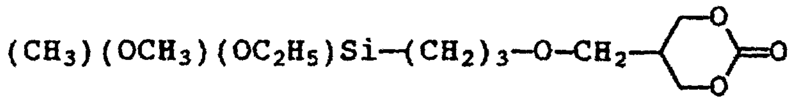
,

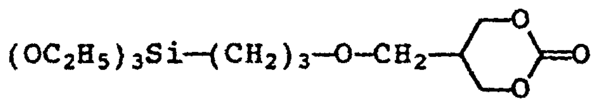
,

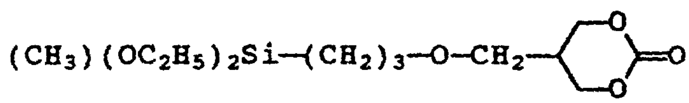
,

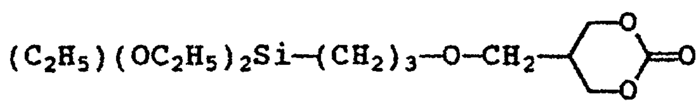
,

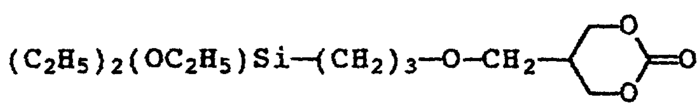
,

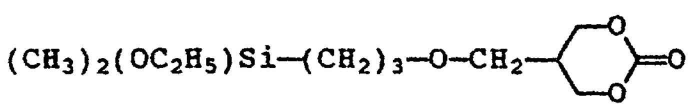
,

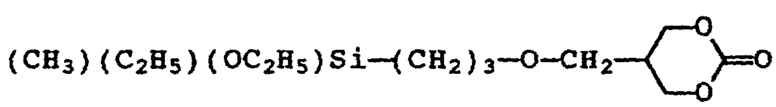
,

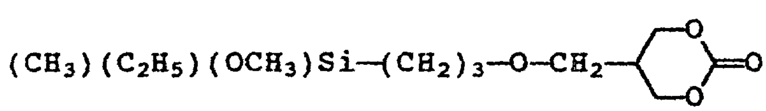
,

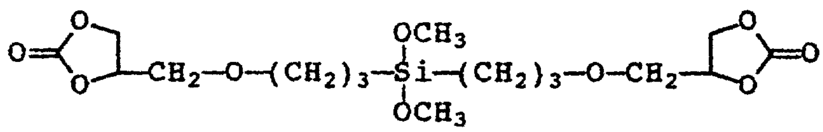

,

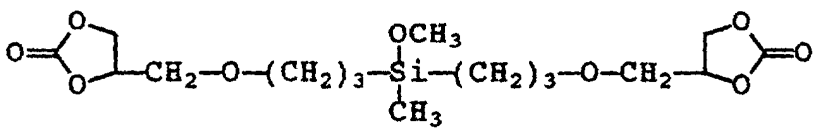

,

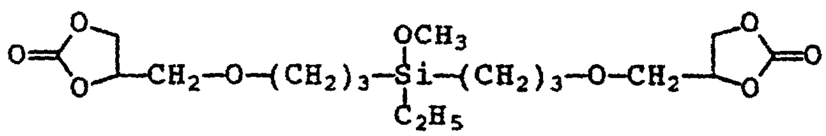

,

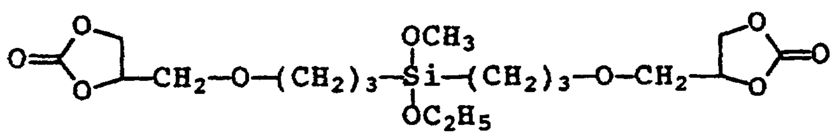

,

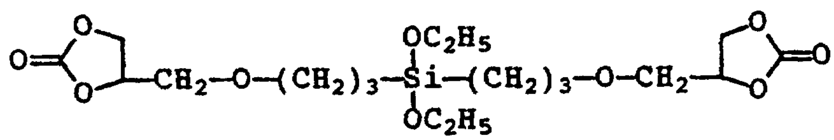

,

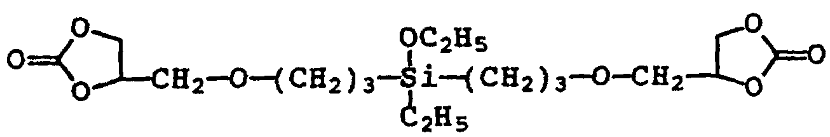

,

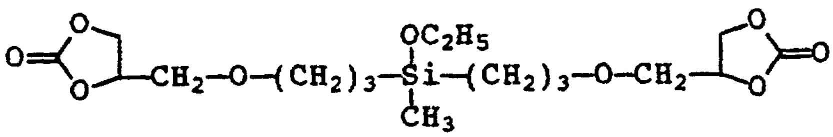

,

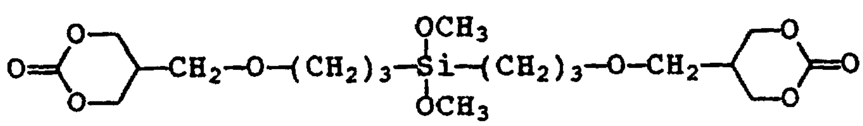

,

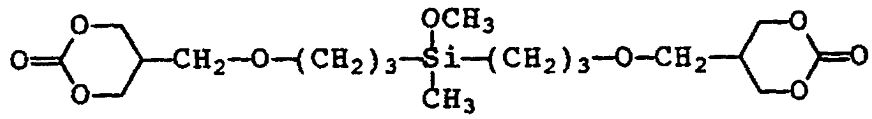

,

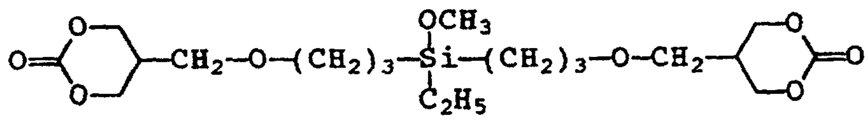

,

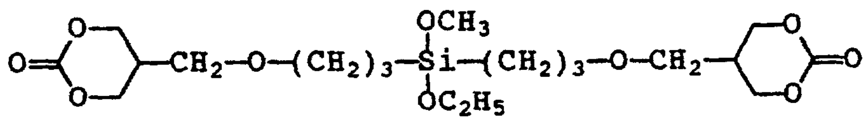

,

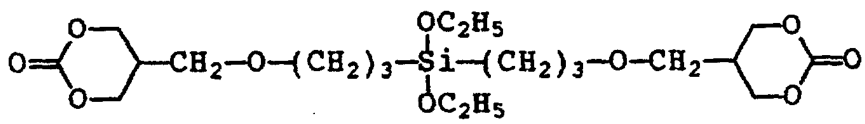

,

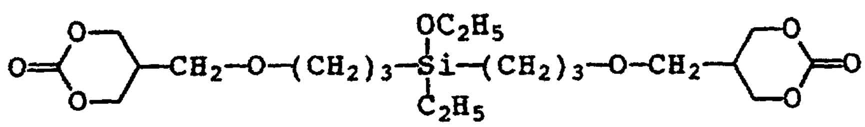

,

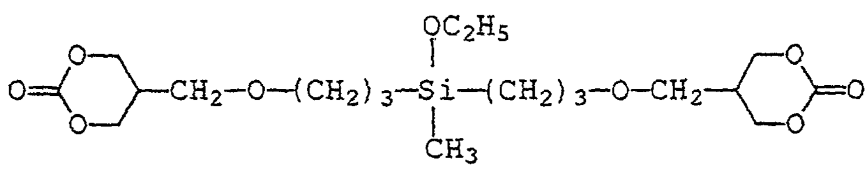

,

Es gibt verschiedene Verfahren zur Herstellung der erfindungsgemäßen Silane.

Variante 1:

In der Variante 1 wird ein Silan der allgemeinen Formel V,

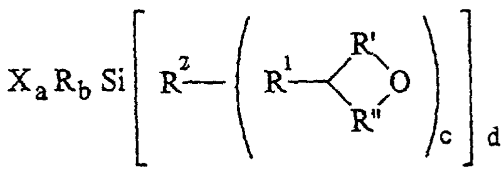

(V)

in der die Reste und Indices gleich oder verschieden sind und folgende Bedeutung haben,

- x = Wasserstoff, Halogen, Hydroxy, Alkoxy, Acyloxy, Alkylcarbonyl, Alkoxycarbonyl oder $NR^3_2$;, mit $R^3$ = Wasserstoff, Alkyl oder Aryl;
- R = Alkyl, Alkenyl, Aryl, Alkylaryl oder Arylalkyl;
- R' = Alkylen, Arylen, Arylenalkylen oder Alkylenarylen mit jeweils 0 bis 10 Kohlenstoffatomen für c+d>2 und mit jeweils 1 bis 10 Kohlenstoffatomen für c+d=2, wobei diese Reste durch Sauerstoff- und Schwefelatome oder durch Amino-Gruppen unterbrochen sein können
- R" = Alkylen, Arylen, Arylenalkylen oder Alkylenarylen mit jeweils 1 bis 10 Kohlenstoffatomen, wobei diese Reste durch Sauerstoff- und Schwefelatome oder durch Amino-gruppen unterbrochen sein können;
- $R^1$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können
- $R^2$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können
- a = 1, 2 oder 3;
- b = 0, 1 oder 2, mit a+b = 1, 2 oder 3;
- c = 1, 2, 3, 4, 5 oder 6;
- d = 4 - a - b

einer Carboxylierung unterworfen.

Das allgemeine Reaktionsschema sieht wie folgt aus:

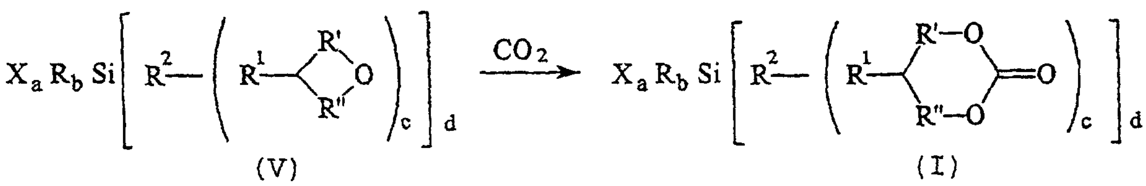


(V) (I)

Bei bevorzugten Ausführungsformen dieses erfindungsgemäßen Verfahrens werden Silane der allgemeinen Formel V' eingesetzt und erfindungsgemäße Silane der allgemeinen Formel I' erhalten. Der Oxiran-Ring der Formel V' ist gegebenenfalls auch substituiert.

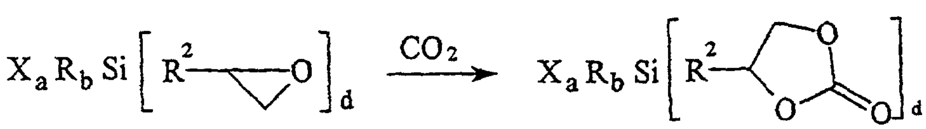


(V') (I')

Ohne Einschränkung der Allgemeinheit sind konkrete Beispiele für Silane der allgemeinen Formel V: Bis-(glycidoxymethyl)dimethoxysilan, Bis-(glycidoxymethyl)diethoxysilan, Bis-(glycidoxyethyl)dimethoxysilan, Bis-(glycidoxyethyl)diethoxysilan, Bis-(glycidoxypropyl)dimeth-oxysilan, Bis-(glycidoxypropyl)diethoxysilan, Tris-(glycidoxymethyl)-methoxysilan, Tris-(glycidoxymethyl)ethoxysilan, Tris-(glycidoxyethyl)methoxysilan, Tris-(glycidoxyethyl) eth-oxysilan, Tris-(glycidoxypropyl)methoxysilan, Tris- (glycid-oxypropyl) ethoxysilan, 3.4-Epoxycyclohexylmethyltrimethoxysilan, 3.4-Epoxycyclohexylmethyltriethoxysilan, 3.4-Epoxycyclohexylethyltrimethoxysilan, 3.4-Ep-oxycyclohexylpropyltrimethoxysilan, 3.4-Epoxycyclohexylbutyltrimethoxysilan.

Silane der allgemeinen Formel V' sind käuflich erwerbbar, so z.B. bei der ABCR GmbH & Co.KG (Karlsruhe) das 2-(3.4-Epoxycyclohexyl)ethyltrimethoxysilan oder das [2-(3.4-Epoxy-4-methylcyclohexyl)propyl]-methyldiethoxysilan.

Am Beispiel der Umsetzung des (3-Glycidoxypropyl)trimethoxysilan mit Kohlendioxid wird das erfindungsgemäße Verfahren der Variante 1 näher erläutert:

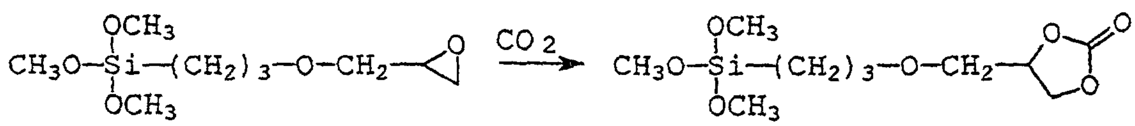


Variante 2:

In der Variante 2 wird ein gegebenenfalls substituiertes Silan der allgemeinen Formel VI

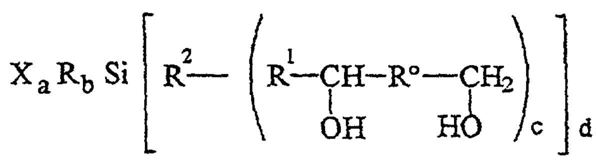

(VI)

mit einem Carbonat der allgemeinen Formel $R^4$-O-CO-O-$R^4$ umgesetzt, wobei der Rest R° Alkylen, Arylen, Arylenalkylen oder Alkylenarylen mit jeweils 0 bis 9 Kohlenstoffatomen bedeutet, wobei diese Gruppen durch Sauerstoff- und Schwefelatome oder durch Amino-Gruppen unterbrochen sein können, wobei die Reste $R^4$ gleich oder verschieden sind und Alkyl, Aryl, Arylalkylen oder Alkylarylen mit jeweils 1 bis 10 Kohlenstoffatomen bedeuten, wobei diese Gruppen durch Sauerstoff- und Schwefelatome oder durch Aminogruppen unterbrochen sein können, und wobei die übrigen Reste und Indices die oben genannte Bedeutung haben. Das allgemeine Reaktionsschema des erfindungsgemäßen Verfahrens in der Variante 2 sieht wie folgt aus.

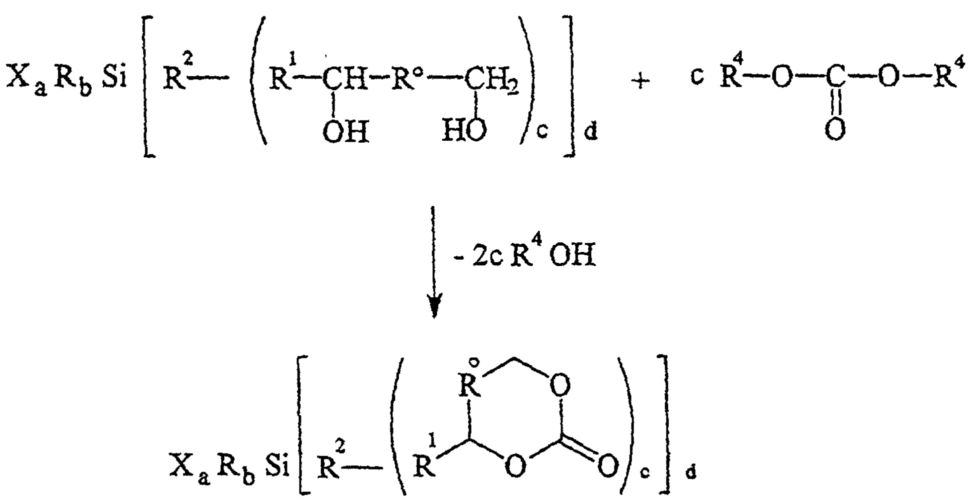


Bei bevorzugten Ausführungsformen des erfindungsgemäßen Verfahrens der Variante 2 werden gegebenenfalls substituierte Silane der allgemeinen Formel VI' eingesetzt,

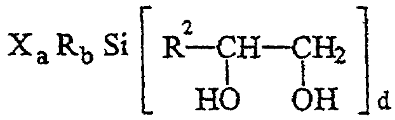

(VI')

wobei die Reste und Indices die oben genannte Bedeutung haben. Das allgemeine Reaktionsschema lautet:

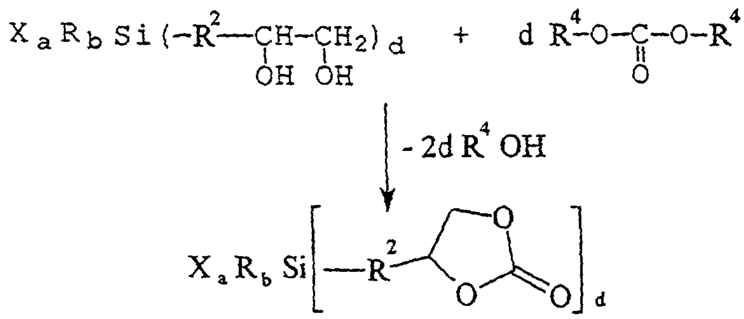


Ohne Einschränkung der Allgemeinheit sind konkrete Beispiele für der Silane der allgemeinen Formel VI:

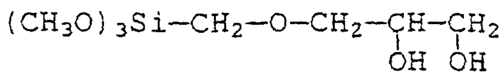

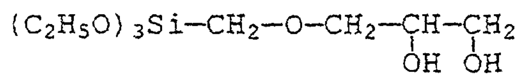

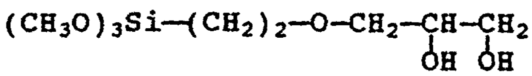

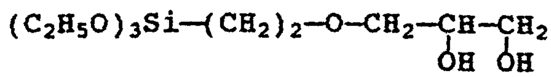

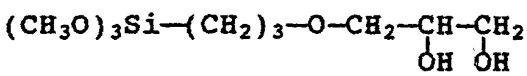

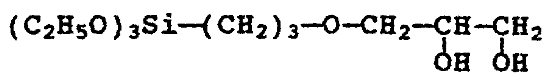

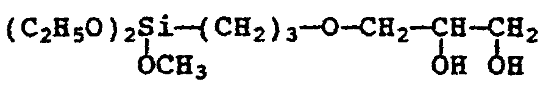

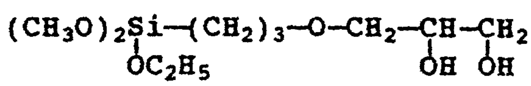

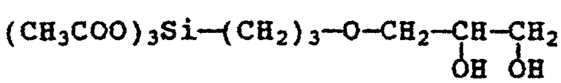

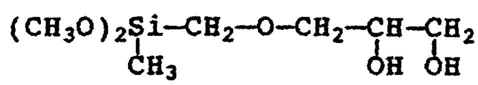

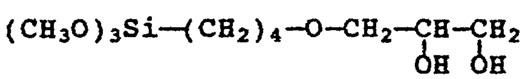

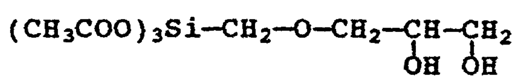

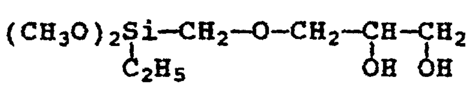

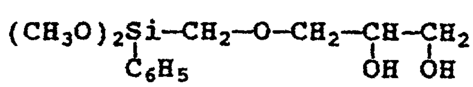

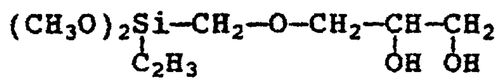
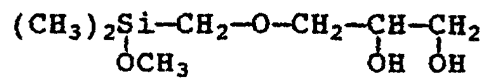
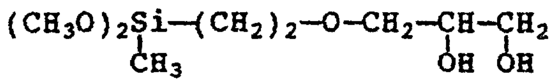
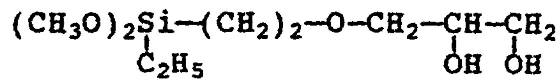
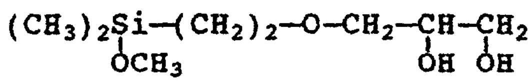
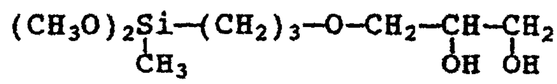
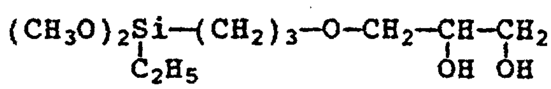
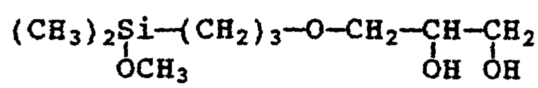
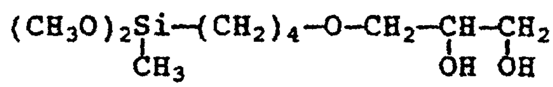
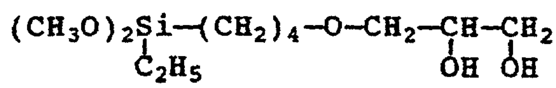
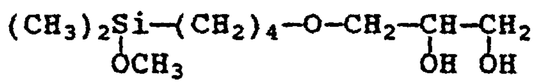
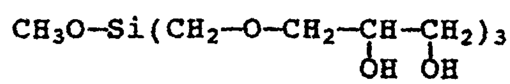
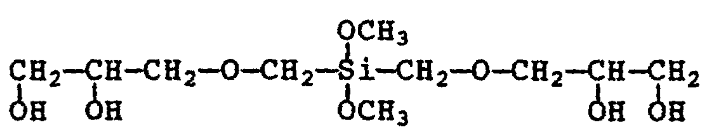
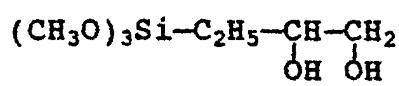
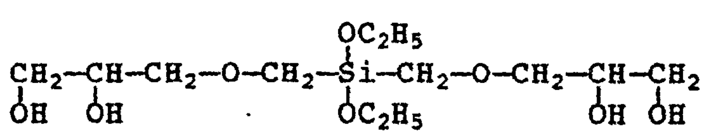
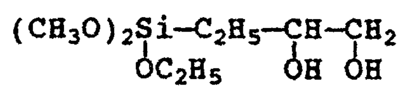
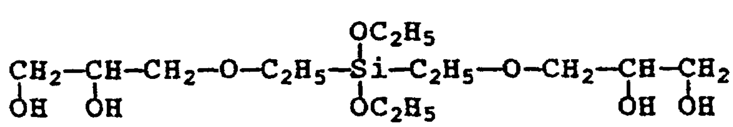
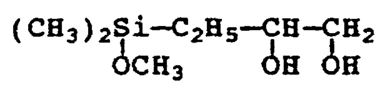
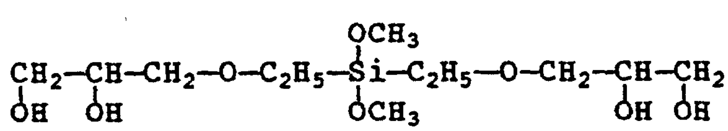
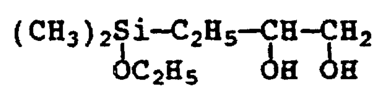

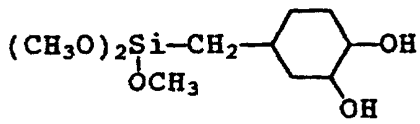

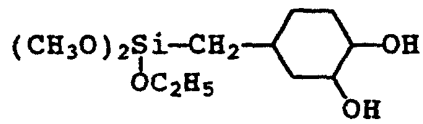

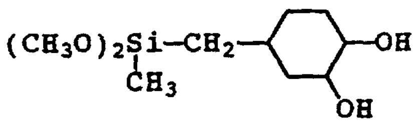

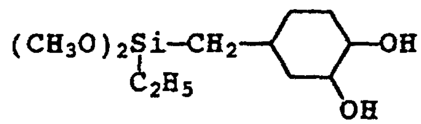

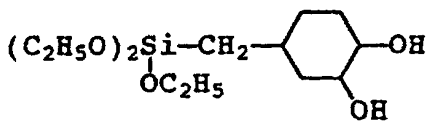

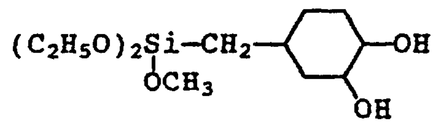

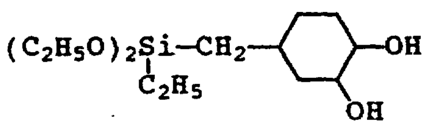

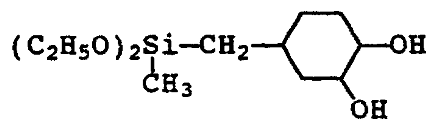

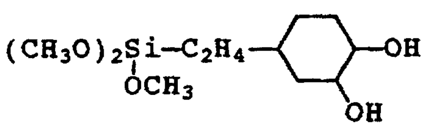

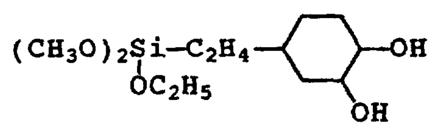

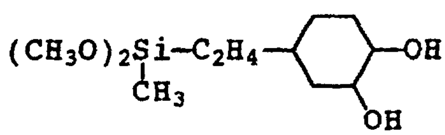

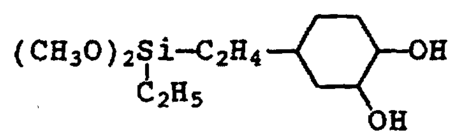

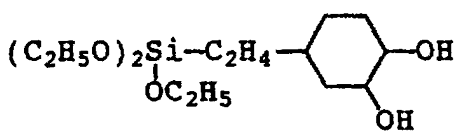

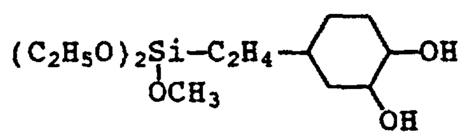

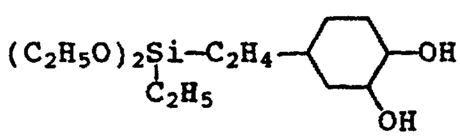

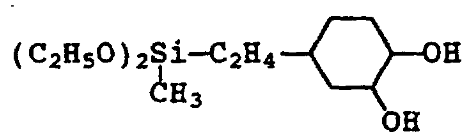

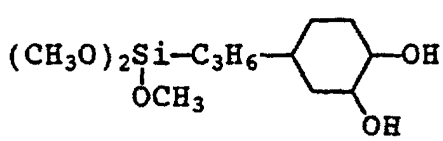

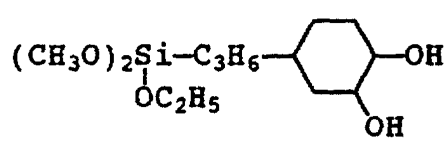

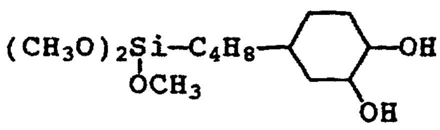
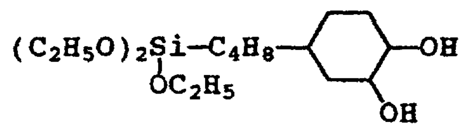

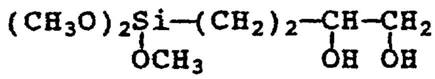
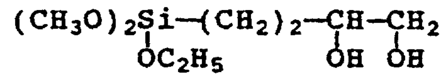

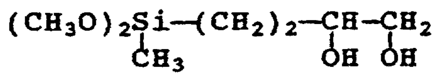
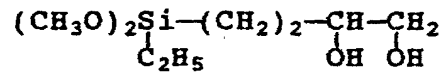

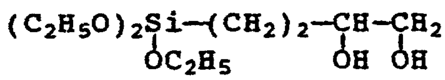
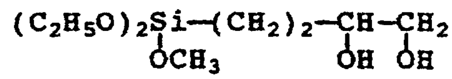

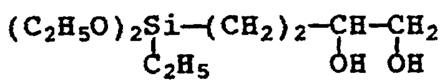
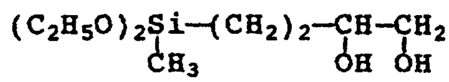

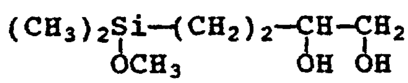
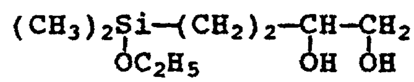

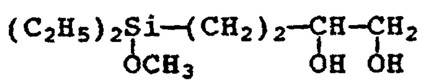
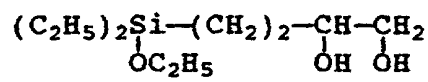

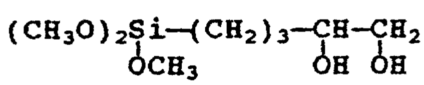
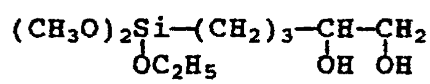

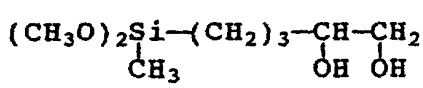
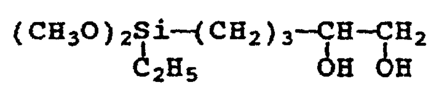

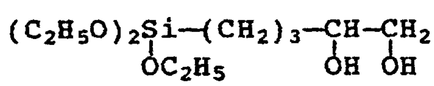
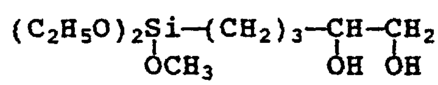

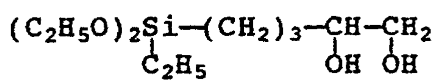
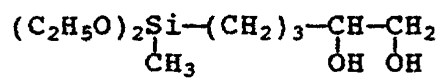

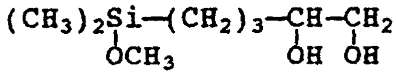

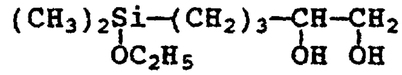

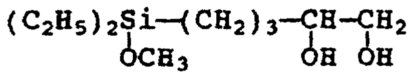

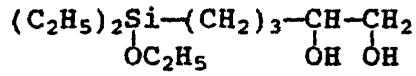

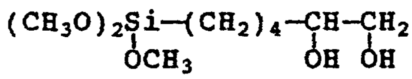

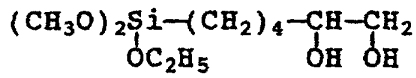

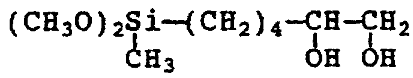

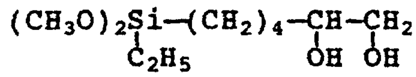

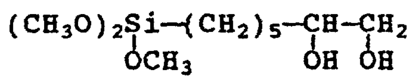

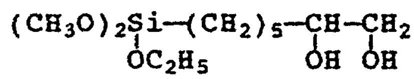

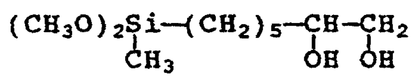

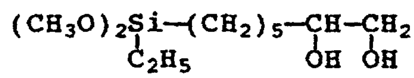

Variante 3:

In einer 3. Variante unterwirft man einen gegebenenfalls substituierten Alkohol der allgemeinen Formel VIII

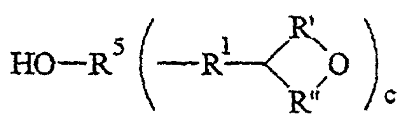

(VIII)

einer Carboxylierung und addiert das Reaktionsprodukt an ein Silan der allgemeinen Formel $X_aR_bSi(R^6\text{-}NCO)_d$.

Die Reste $R^5$ und $R^6$ haben folgende Bedeutung, wobei die Summe der Kohlenstoffatome der Reste $R^5$ und $R^6$ die Zahl 9 nicht übersteigt. $R^5$ = Alkylen, Arylen, Arylenalkylen oder Alkylenarylen mit jeweils 0 bis 8 Kohlenstoffatomen, wobei diese Reste durch Sauerstoff- und Schwefelatome oder durch Amino-Gruppen unter-brochen sein können. $R^6$ = Alkylen, Arylen, Arylenalkylen oder Alkylenarylen mit jeweils 1 bis 8 Kohlenstoffatomen, wobei diese Reste durch Sauerstoff- und Schwefelatome oder durch Amino-Gruppen unterbrochen sein können. Die übrigen Reste und Indices haben die oben genannte Bedeutung.

Das allgemeine Reaktionsschema sieht wie folgt aus:

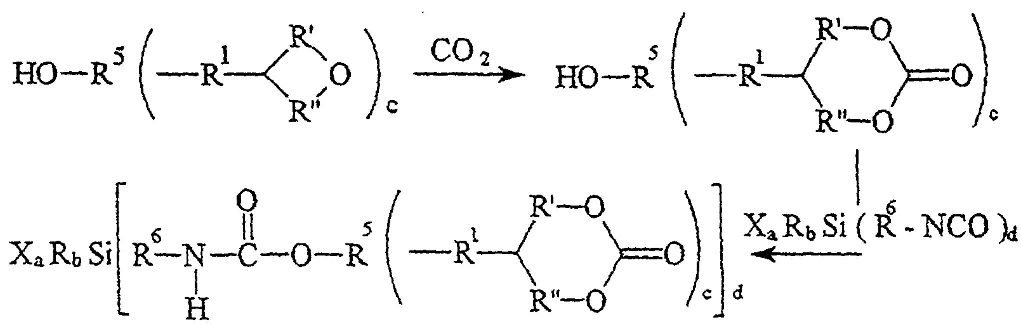

Ohne Einschränkung der Allgemeinheit ist eine bevorzugte Ausführungsform des Alkohols der allgemeinen Formel VIII ein Alkohol der allgemeinen Formel VIII', in der der Rest $R^5$ die oben genannte Bedeutung hat.

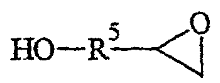

(VIII')

Das allgemeine Reaktionsschema sieht wie folgt aus:

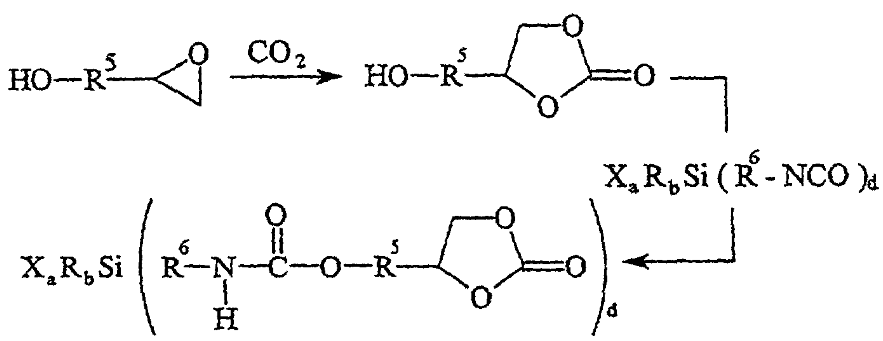

Konkrete Beispiele für Alkohole der Formel VIII sind:

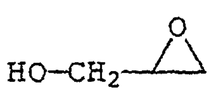 , 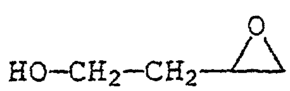 , 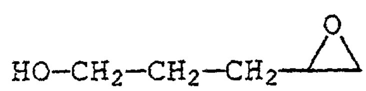 ,

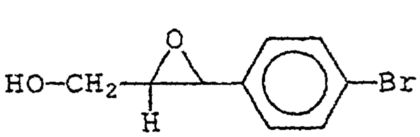 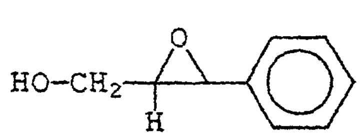 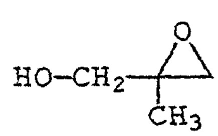

Es ist auch möglich, die gemäß der eben genannten Reaktionen erhaltenen erfindungsgemäßen Silane nach bekannten Methoden weiter zu modifizieren und andere Substituenten einzuführen.

Die erfindungsgemäßen Carbonat-Silane sind stabile Verbindungen, und können entweder alleine oder zusammen mit anderen hydrolysierbaren, kondensierbaren und/oder polymerisierbaren Komponenten zu Kieselsäurepolykondensaten oder zu Kieselsäureheteropolykondensaten verarbeitet werden, deren endgültige Härtung dann

durch Polymerisation über eine Ringöffnung der cyclischen Carbonat-Gruppe erfolgt. Die erfindungsgemäßen Silane können aber auch alleine oder zusammen mit anderen hydrolysierbaren, kondensierbaren und/oder polymerisierbaren Komponenten zu Polymerisaten verarbeitet werden, die durch anschließende hydrolytische Kondensation verfestigt werden können.

Kieselsäure(hetero)polykondensate, die mit organischen Gruppen modifiziert sind, sowie Verfahren zu deren Herstellung (z.B. ausgehend von hydrolytisch kondensierbaren Organosilanen nach dem Sol-Gel-Prozeß) sind in großer Zahl bekannt. Derartige Kondensate finden für die verschiedensten Zwecke Verwendung, z.B. als Formmassen, als Lacke für Überzüge, etc.. Aufgrund der vielfältigen Anwendungsmöglichkeiten dieser Substanzklasse besteht aber auch ein ständiges Bedürfnis nach Modifizierung der bereits bekannten Kondensate, zum einen um dadurch neue Anwendungsgebiet zu erschließen und zum anderen, um deren Eigenschaften für bestimmte Verwendungszwecke noch weiter zu optimieren.

Die erfindungsgemäßen Carbonat-Silane sind im basischen oder neutralen Milieu hydrolysier- und kondensierbar, ohne daß die cyclische Carbonatgruppe vorzeitig geöffnet wird. Dadurch ist es möglich, die erfindungsgemäßen Carbonat-Silane durch hydrolytische Kondensation in ein anorganisch-organisches Netzwerk einzubauen. Die erfindungsgemäßen Carbonat-Silane enthalten hydrolysierbare Gruppen X, z.B. Alkoxy-Gruppen, so daß damit ein anorganisches Netzwerk (Si-O-Si-Einheiten) aufgebaut werden kann, während die im Rest mit dem Index c bzw. d enthaltenen Carbonat-Gruppen unter Aufbau eines organischen Netzwerkes polymerisiert werden können. Dadurch ist es möglich, organisch modifizierte, hydrolysier- und kondensierbare Silane in Beschichtungs-, Füll-, Klebe- und Dichtungsmassen, in Formkörpern und Einbettmassen, in Bulkmaterialien, in Kompositen, Vergußmassen, Haftvermittlern und Bindemitteln für Partikel nach dem Stand der Technik durch die erfindungsgemäßen Carbonat-Silane zu ersetzen.

Zum Aufbau des anorganischen Netzwerkes werden die erfindungsgemäßen Silane, gegebenenfalls unter Zusatz anderer cokondensierbarer Komponenten, hydrolysiert und polykondensiert. Die Polykondensation erfolgt vorzugsweise nach dem Sol-Gel-Verfahren, wie es z.B. in den DE-A1 2758414, 2758415, 3011761, 3826715 und 3835968 beschrieben ist.

Zum Aufbau des organischen Netzwerkes werden die erfindungsgemäßen Carbonat-Silane, gegebenenfalls unter Zusatz anderer copolymerisierbarer Komponenten, ionisch oder kovalent nucleophil polymerisiert. Die Polymerisation kann z.B. thermisch oder photochemisch unter Einsatz von Methoden erfolgen, wie sie in den DE-A1 3143820, 3826715 und 3835968 beschrieben sind. Die Polymerisation kann ferner chemisch induziert ablaufen, z.B. in Zwei-Komponenten-Materialien.

Bei der Polymerisation der erfindungsgemäßen Carbonat-Silane entstehen Polycarbonate des Typs

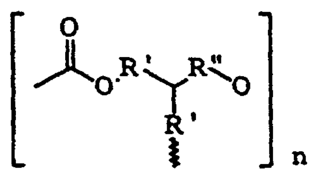

Bezüglich näherer Einzelheiten hinsichtlich der ringöffnenden Polymerisation cyclischer Carbonate wird auf folgende Literaturstellen verwiesen:

Adv. Mater., **1994,** 6, No.1, 27 - 30 (1994).
Makromol. Chem. **193,** 1207 - 1217 (1992).
Makromol. Chem. **186,** 331 - 337 (1985).
Makromol. Chem., Macromol. Symp. **60,** 119 - 131 (1992).

Aliphatische Polycarbonate und aliphatische Polycarbonate enthaltende Copolymere finden immer breiteres Interesse als biologisch abbaubare Materialien. Aliphatische erfindungsgemäße Carbonat-Silane sind deshalb wichtige Ausgangsmaterialien zur Herstellung biologisch abbaubarer Materialien.

Als weitere polymerisierbare Komponenten können Verbindungen zugesetzt werden, die radikalisch und/oder ionisch und/oder kovalent-nucleophil polymerisierbar sind. Radikalisch polymerisierbare Verbindungen, die zugesetzt werden können, sind z.B. solche mit C=C-Doppelbindungen, wie z.B. Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch ringöffnend polymerisierbar sind, wie etwa Spiroorthoester, Spiroorthocarbonate, bicyclische Spiroorthoester, Mono- oder Oligoepoxide, oder die ionisch ringöffnend polymerisieren, wie z.B. cyclische Carbonate. Es können aber auch Verbindungen zugesetzt werden, die z.B. sowohl kationisch als auch radikalisch polymerisierbar sind, wie etwa Methacryloyl-Spiroorthoester. Diese polymerisieren radikalisch über die C=C-Doppelbindung und kationisch unter Ringöffnung. Die Herstellung dieser Systeme ist z.B. im Journal f. prakt. Chemie,

Band 330, Heft2, 1988, S. 316-318, beschrieben.

Ferner ist es möglich, andere bekannte, silan-gebundene cyclische Systeme zuzusetzen, die mit einpolymerisiert werden können. Solche Systeme sind z.B. Spiro-Silane, wie in der DE 4125201 C1 beschrieben, und solche Silane, die Epoxide enthalten und u.a. für die Herstellung der erfindungsgemäßen Carbonat-Silane eingesetzt werden. Solche Systeme sind bei der Herstellung der erfindungsgemäßen Carboant-Silane bereits beschrieben.

Die erfindungsgemäßen Carbonat-Silane stellen hochreaktive Systeme dar, die zu Poly(hetero)kondensaten führen, die z.B. bei UV-Bestrahlung, bei thermischer Behandlung oder chemisch induziert innerhalb kürzester Zeit zu mechanisch stabilen Überzügen oder Form- bzw. Füllkörpern etc. führen. Die erfindungsgemäßen Carbonat-Silane sind über einfache Additionsreaktionen herstellbar und weisen bei geeigneter Auswahl der Ausgangsverbindungen eine große Anzahl varrierbarer, reaktiver Gruppen unterschiedlichster Funktionalität auf.

Bei Anwesenheit von zwei oder mehr Resten mit dem Index c bzw. d ist die Ausbildung eines dreidimensionalen, organischen Netzwerkes möglich. Über den Abstand zwischen dem Si-Atom und der Carbonat-Gruppe, d.h. über die Kettenlänge der Gruppe R', und über die Anwesenheit weiterer funktioneller Gruppen in dieser Kette können die mechanischen Eigenschaften (z.B. Flexibilität) und die physikalisch-chemischen Eigenschaften (Adsorption, Brechzahl, Haftung etc.) der Poly(hetero)kondensate beeinflußt werden. Durch die Ausbildung eines anorganischen Netzwerkes können je nach Art und Anzahl der hydrolysierbaren Gruppen (z.B. Alkoxy-Gruppen) silicon-oder glasartige Eigenschaften der Poly(hetero)kondensate eingestellt werden.

Berücksichtigt man dann noch die Variationsmöglichkeiten der cokondensierbaren und copolymerisierbaren Komponenten, so wird offenbar, daß über die erfindungsgemäßen Carbonat-Silane Kieselsäurepoly(hetero)kondensate zur Verfügung gestellt werden, die in vielfältiger Weise an vorgegebene Einsatzgebiete angepaßt werden können, und die deshalb auf allen Gebieten, auf denen bereits bisher Kieselsäure(hetero)polykondensate eingesetzt werden, Verwendung finden können, aber auch neue Anwendungsmöglichkeiten eröffnen, z.B. auf dem Gebiet der Optik, der Elektronik, der Medizin, der Optoelektronik, der Verpackungsmittel für Lebensmittel etc..

Die erfindungsgemäßen Carbonat-Silane können entweder als solche verwendet werden oder in Zusammensetzungen, die zusätzlich an den Verwendungszweck angepaßte Additive enthalten, z.B. übliche Lackadditive, Lösungsmittel, Füllstoffe, Photoinitiatoren, thermische und/oder chemische Initiatoren, Verlaufmittel und Pigmente. Die erfindungsgemäßen Carbonat-Silane oder die sie enthaltenen Zusammensetzungen eignen sich z.B. zur Herstellung von Beschichtungs-, Füllstoff- oder Bulkmaterialien, von Klebstoffen und Spritzgießmassen, von Fasern, Folien, Haftvermittlern, von Abformmassen und von Einbettmaterialien. Werden zu diesen Zwecken aliphatische Carbonat-Silane eingesetzt, so werden biologisch abbaubare Materialien erhalten.

Wegen der cyclischen Carbonat-Gruppen erfahren die erfindungsgemäßen Carbonat-Silane bei der Aushärtung nur eine geringe Schrumpfung. Ist keine Schrumpfung oder sogar eine Expansion gewünscht, so können den erfindungsgemäßen Carbonat-Silanen z.B. Spiro-Silane der allgemeinen Formel III zugesetzt werden. Diese Silane werden weiter unten beschrieben. Das Schrumpfverhalten ist also an die vorgegebenen Bedingungen des jeweiligen Anwendungsfalles anpaßbar. Beschichtungen und Formkörper aus den erfindungsgemäßen Carbonat-Silanen haben weiterhin den Vorteil, daß sie photochemisch strukturierbar sind. Spezielle Anwendungsgebiet sind z.B. die Beschichtung von Substraten aus Metall, Kunststoff, Papier, Keramik etc. durch Tauchen, Gießen, Streichen, Spritzen, elektrostatisches Spritzen, Elektrotauchlakierung etc., der Einsatz für optische, optoelektrische oder elektronische Komponenten, die Herstellung von Füllstoffen, die Herstellung von kratzfesten, abriebfesten Korrosionsschutzbeschichtungen, die Herstellung von Formkörpern, z.B. durch Spritzguß, Formgießen oder Extrusion, und die Herstellung von Compositen, z.B. mit Fasern, Füllstoffen oder Geweben.

Neben den erfindungsgemäßen Carbonat-Silanen der Formel I können noch weitere hydrolytisch kondensierbare Verbindungen des Siliciums, des Bors, des Aluminiums, des Phosphors, des Zinns, des Bleis, der Übergangsmetalle, der Lanthaniden oder der Actiniden eingesetzt werden. Diese Verbindungen können entweder als solche oder bereits in vorkondensierter Form zur Herstellung der Polykondensate herangezogen werden. Bevorzugt ist es, wenn mindestens 10 Mol-%, insbesondere mindestens 80 Mol-% und speziell mindestens 90 Mol-%, auf der Basis monomerer Verbindungen, der zu Herstellung der Kieselsäure(hetero)polykondensate herangezogenen Ausgangsmaterialien Silicium-Verbindungen sind.

Ebenso ist es bevorzugt, wenn den Kieselsäure(hetero)polykondensaten mindestens 5 Mol-%, z.B. 25 bis 100 Mol-%, insbesondere 50 bis 100 Mol-% und speziell 75 bis 100 Mol-%, jeweils auf der Basis monomerer Verbindungen, an einem oder mehreren der erfindungsgemäßen Carbonat-Silane zugrundeliegen.

Unter den von Silanen der allgemeinen Formel I verschiedenen, hydrolytisch kondensierbaren Silicium-Verbindungen, die gegebenenfalls eingesetzt werden können, sind solche der allgemeinen Formel II besonders bevorzugt,

$$R_a(R''Z')_bSiX_{4-(a+b)} \qquad (II)$$

in der die Reste R,R", X und Z' gleich oder verschieden sind und folgende Bedeutung haben:

R = Alkyl, Alkenyl, Aryl, Alkylaryl oder Arylalkyl,
R" = Alkylen oder Alkenylen, wobei diese Reste durch Sauerstoff- oder Schwefelatome oder -NH-Gruppen unterbrochen sein können,
X = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinyl-Gruppe,
a = 0, 1, 2, oder 3,
b = 0, 1, 2, oder 3, mit a+b = 1, 2 oder 3.

Solche Silane sind z.B. in der DE 34 07 087 C2 beschrieben. Die Alkyl-Reste sind z.B. geradkettige, verzweigte oder cyclische Reste mit 1 bis 20, vorzugsweise mit 1 bis 10 Kohlenstoff-Atomen, und besonders bevorzugt sind niedere Alkyl-Reste mit 1 bis 6 Kohlenstoff-Atomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, vorzugsweise mit 2 bis 10 Kohlenstoff-Atomen, und besonders bevorzugt sind niedere Alkenyl-Reste mit 2 bis 6 Kohlenstoff-Atomen, wie z.B. Vinyl, Allyl oder 2-Butenyl.

Bevorzugte Aryl-Reste sind Phenyl, Biphenyl und Naphthyl.

Die Alkoxy-, Acyloxy-, Alkylcarbonyl-, Alkoxycarbonyl- und Amino-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$.

Unter den Halogenen sind Fluor, Chlor und Brom bevorzugt.

Spezielle Beispiele für hydrolytisch kondensierbare Silane der allgemeinen Formel II sind: $CH_3$-Si-$Cl_3$, $CH_3$-Si-$(OC_2H_5)_3$, $C_2H_5$-Si-$Cl_3$, $C_2H_5$-Si-$(OC_2H_5)_3$, $CH_2$=CH-Si-$(OC_2H_5)_3$, $CH_2$=CH-Si-$(OC_2H_4OCH_3)_3$, $(CH_3)_2$-Si-$Cl_2$, $CH_2$=CH-Si-$(OOCCH_3)_3$, $(CH_3)_2$-Si-$(OC_2H_5)_2$, $(C_2H_5)_3$-Si-Cl, $(C_2H_5)_2$-Si-$(OC_2H_5)_2$, $(CH_3)_2(CH_2$=CH)-Si-$Cl_2$, $(CH_3)_3$-Si-Cl, $(t-C_4H_9)(CH_3)_2$-Si-Cl, $(CH_3O)_3$-Si-$C_3H_6$-NH-$C_2H_4$-NH-$C_2H_4$-$NH_2$, $(CH_3O)_3$-Si-$C_3H_6$-SH, $(CH_3O)_3$-Si-$C_3H_6$-NH-$C_2H_4$-$NH_2$, $(CH_3O)_3$-Si-$C_3H_6$-Cl, $(CH_3O)3$-Si-$C_3H_6$-O-C(O)-C(CH3)=CH , $(CH_3)_2(CH_2$=CH-$CH_2)$-Si-Cl, $(C_2H_5O)_3$-Si-$C_3H_6$-$NH_2$,

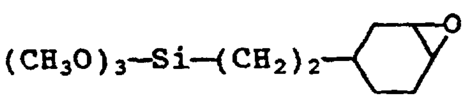 , 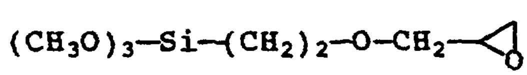 ,

$(C_2H_5O)_3$-Si-$C_3H_6$-CN,

Unter den von Silanen der allgemeinen Formel I verschiedenen, hydrolytisch kondensierbaren Silicium-Verbindungen, die gegebenenfalls eingesetzt werden können, sind solche der allgemeinen Formel (III) ebenfalls bevorzugt.

$$Y_n\ Si\ X_m\ R_{4-(n+m)} \qquad \text{(III)}$$

Die Reste X, Y und R sind gleich oder verschieden und haben folgende Bedeutung:

R = Alkyl, Alkenyl, Aryl, Alkylaryl oder Arylalkyl;
X = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl;
Y = ein Substituent, der einen substituierten oder unsubstituierten 1,4,6-Trioxaspiro-[4,4]-nonan-Rest enthält;
n = 1, 2 oder 3;
m = 1, 2 oder 3, mit n+m $\leq$ 4.

Diese Spiro-Silane sind über die Reste X hydrolysierbar und über die Reste Y polymerisierbar und sie sind in der DE 4125201 C1 ausführlichst beschrieben.

Die Alkyl-Reste sind z.B. geradkettige, verzweigte oder cyclische Reste mit 1 bis 20, vorzugsweise mit 1 bis 10 Kohlenstoff-Atomen, und besonders bevorzugt sind niedere Alkyl-Reste mit 1 bis 6 Kohlenstoff-Atomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, vorzugsweise mit 2 bis 10 Kohlenstoff-Atomen, und besonders bevorzugt sind niedere Alkenyl-Reste mit 2 bis 6 Kohlenstoff-Atomen, wie z.B. Vinyl, Allyl oder 2-Butenyl.

Bevorzugte Aryl-Reste sind Phenyl, Biphenyl und Naphthyl.

Die Alkoxy-, Acyloxy-, Alkylcarbonyl-, Alkoxycarbonyl- und Amino-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$.

Unter den Halogenen sind Fluor, Chlor und Brom bevorzugt.

Unter den von Silanen der allgemeinen Formel I verschiedenen, hydrolytisch kondensierbaren Silicium-Verbindungen, die gegebenenfalls eingesetzt werden können, sind solche der allgemeinen Formel (IV) ebenfalls bevorzugt,

$$\{X_nR_kSi[(R^2A)_1]_{4-(n+k)}\}_xB \qquad \text{(IV)}$$

in der die Reste A, R, $R^2$ und X gleich oder verschieden sind und folgende Bedeutung haben.

- A = O, S, PR', POR', NHC(O)NR' oder NHC(O)O, mit R' = Wasserstoff, Alkyl oder Aryl,
- B = geradkettiger oder verzweigter organischer Rest, der sich von einer Verbindung B' mit mindestens einer (für 1 = 1 und A = NHC(O)O oder NHC(O)NR') bzw. mindestens zwei C=C-Doppelbindungen und 5 bis 50 Kohlenstoff-Atomen ableitet,
  mit R'= Wasserstoff, Alkyl oder Aryl,
- R = Alkyl, Alkenyl, Aryl, Alkylaryl oder Arylalkyl,
- $R^2$ = Alkylen, Arylen oder Alkylenarylen,
- x = Wasserstoff, Halogen, Hydroxy, Alkoxy, Acyloxy, Alkylcarbonyl, Alkoxycarbonyl oder $NR'_2$, mit R' = Wasserstoff, Alkyl oder Aryl,
- n = 1, 2 oder 3,
- k = 0, 1 oder 2,
- l = 0 oder 1,
- x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn 1 = 1 und A für NHC(O)O oder NHC(O)NR' steht.

Solche Silane sind in der DE 4011044 C2 und in der EP 0451709 A2 ausführlichst beschrieben.

Die Alkyl-Reste sind z.B. geradkettige, verzweigte oder cyclische Reste mit 1 bis 20, vorzugsweise mit 1 bis 10 Kohlenstoff-Atomen, und besonders bevorzugt sind niedere Alkyl-Reste mit 1 bis 6 Kohlenstoff-Atomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenyl-Reste sind z.B. geradkettige, verzweigte oder cyclische Reste mit 2 bis 20, vorzugsweise mit 2 bis 10 Kohlenstoff-Atomen, und besonders bevorzugt sind niedere Alkenyl-Reste mit 2 bis 6 Kohlenstoff-Atomen, wie z.B. Vinyl, Allyl oder 2-Butenyl.

Bevorzugte Aryl-Reste sind Phenyl, Biphenyl und Naphthyl.

Die Alkoxy-, Acyloxy-, Alkylcarbonyl-, Alkoxycarbonyl- und Amino-Reste leiten sich vorzugsweise von den oben genannten Alkyl- und Aryl-Resten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl,

Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Nitro, Epoxy, $SO_3H$ und $PO_4H_2$.

Unter den Halogenen sind Fluor, Chlor und Brom bevorzugt.

Der Rest B leitet sich von einer substituierten oder unsubstituierten Verbindung B' mit mindestens zwei C=C-Doppelbindungen ab, z.B. Vinyl-, Allyl-, Acryl- und/oder Methacrylat-Gruppen, und 5 bis 50, vorzugsweise 6 bis 30 Kohlenstoff-Atomen. Vorzugsweise leitet sich B ab, von einer substituierten oder unsubstituierten Verbindung B' mit zwei oder mehreren Acrylat- oder Methacrylat-Gruppen.

Falls die Verbindung B' substituiert ist, können die Substituenten unter den oben genannten Substituenten ausgewählt sein.

Die erfindungsgemäßen Carbonat-Silane müssen für die Weiterverarbeitung zu den Poly(herero)kondensaten nicht unbedingt extra isoliert werden. Es ist auch möglich, in einem EintopfVerfahren, diese Silane zunächst herzustellen und dann, gegebenenfalls nach Zusatz weiterer hydrolysierbarer Verbindungen, hydrolytisch zu kondensieren.

Unter den gegebenenfalls eingesetzten hydrolysierbaren Aluminium-Verbindungen sind diejenigen besonders bevorzugt, die die allgemeine Formel $AlR^o_3$ aufweisen, in der die Reste R °, die gleich oder verschieden sein können, ausgewählt sind aus Halogen, Alkoxy, Alkoxycarbonyl und Hydroxy. Hinsichtlich der näheren (bevorzugten) Definitionen dieser Reste kann auf die Ausführungen im Zusammenhang mit den geeigneten hydrolysierbaren Silicium-Verbindungen verwiesen werden. Die soeben genannten Gruppen können auch ganz oder teilweise durch Chelatliganden (z.B. Acetylaceton oder Acetessigsäureester, Essigsäure) ersetzt sein.

Besonders bevorzugte Aluminium-Verbindungen sind die Aluminiumalkoxide und -halogenide. In diesem Zusammenhang können als konkrete Beispiele genannt werden:
$Al(OCH_3)_3$, $Al(OC_2H_5)_3$, $Al(O\text{-}n\text{-}C_3H_7)_3$, $Al(O\text{-}i\text{-}C_3H_7)_3$,
$Al(OC_4H_9)_3$, $Al(O\text{-}i\text{-}C_4H_9)_3$, $Al(O\text{-}s\text{-}C_4H_9)_3$, $AlCl_3$, $AlCl(OH)_2$.

Bei Raumtemperatur flüssige Verbindungen, wie z.B. Aluminiums-butylat und Aluminium-i-propylat, sind besonders bevorzugt.

Geeignete hydrolysierbare Titan- oder Zirkonium-Verbindungen, die gegebenenfalls eingesetzt werden können, sind solche der allgemeinen Formel M $X_yR_z$ in der M Ti oder Zr bedeutet, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel I definiert sind. Dies gilt auch für die bevorzugten Bedeutungen. Besonders bevorzugt handelt es sich bei den Verbindungen der eben genannten Formel um solche, in denen y gleich 4 ist.

Wie im Falle der obigen Al-Verbindungen können auch komplexierte Ti- oder Zr-Verbindungen eingesetzt werden. Zusätzliche bevorzugte Komplexbildner sind hier Acrylsäure und Methacrylsäure. Konkrete Beispiele für einsetzbare Zr- und Ti-Verbindungen sind die folgenden:
$TiCl_4$, $Ti(OC_2H_5)_4$, $Ti(OC_3H_7)_4$, $Ti(O\text{-}i\text{-}C_3H_7)_4$, $Ti(OC_4H_9)_4$, $Ti(2\text{-}ethylhexoxy)_4$, $ZrCl_4$, $Zr(OC_2H_5)_4$, $Zr(OC_3H_7)_4$, $Zr(O\text{-}i\text{-}C_3H_7)_4$, $Zr(OC_4H_9)_4$, $Zr(2\text{-}ethylhexoxy)_4$, $ZrOCl_2$.

Weitere hydrolysierbare Verbindungen, die zur Herstellung der Polyheterokondensate eingesetzt werden können, sind z.B. Bortrihalogenide und Borsäureester, wie z.B. $BCl_3$, $B(OCH_3)_3$ und $B(OC_2H_5)_3$, Zinntetrahalogenide und Zinntetraalkoxide, wie z.B. $SnCl_4$ und $Sn(OCH_3)_4$, und Vanadyl-Verbindungen, wie z.B. $VOCl_3$ und $VO(OCH_3)_3$.

Wie bereits erwähnt, kann die Herstellung der Poly(hetero)kondensate in auf diesem Gebiet üblicher Art und Weise erfolgen. Werden praktisch ausschließlich Silicium-Verbindungen eingesetzt, kann die hydrolytische Kondensation in den meisten Fällen dadurch erfolgen, daß man den zu hydrolysierenden Silicium-Verbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt.

Bei Anwesenheit reaktiver Verbindungen des Al, Ti oder Zr empfielt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingestzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von feuchtigkeitsbeladenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylether, Dimethylformamid, tertiäre Amine, insbesondere Triethylamin, und deren Gemische in Frage.

Bevorzugt wird die Hydrolyse in einem bzgl. der Carbonat-Silane basischen oder neutralen Milieu durchgeführt. Dies wird entweder durch ein basisches Lösungsmittel, wie z.B. durch Triethylamin, erzeugt, oder durch Zugabe von basischen Hydrolyse- und Kondensationskatalysatoren, wie z.B. von Methylimidazol, tertiären Aminen, etc..

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von von Silicium-Verbindungen verschiedenen hydrolysierbaren Verbindungen Ausfällungen während der Hydrolyse und der Polykondensation so weit wie möglich zu vermeiden, kann die Wasserzugabe in mehreren Stufen, z.B. in drei Stufen, durchgeführt werden. Dabei kann in der ersten Stufe z.B. ein Zehntel bis ein Zwangzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Das so erhaltene Poly(hetero)kondensat kann entweder als solches oder nach teilweiser oder nahezu vollständiger Entfernung des verwendeten Lösungsmittels weiterverarbeitet werden. In einigen Fällen kann es sich als vorteilhaft erweisen, in dem nach der Polykondensation erhaltenen Produkt das überschüssige Wasser und das gebildete und gegebenenfalls zusätzlich eingesetzte Lösungsmittel durch ein anderes Lösungsmittel zu ersetzen, um das Poly(hetero)kondensat zu stabilisieren. Zu diesem Zweck kann die Reaktionsmischung z.B. im Vakuum bei leicht erhöhter Temperatur so weit eingedickt werden, daß sie noch problemlos mit einem anderen Lösungsmittel aufgenommen werden kann.

Sollen diese Poly(hetero)kondensate als Lacke für die Beschichtung (z.B. von Kunststoffen wie etwa PVC, PC, PMMA, PE, PS etc., von Glas, Papier, Holz, Keramik, Metall usw.) eingesetzt werden, so können diesen spätestens vor der Verwendung gegebenenfalls noch übliche Lackadditive zugegeben werden, wie z.B. Färbemittel (Pigmente oder Farbstoffe), Füllstoffe, Oxidationsinhibitoren, Verlaufmittel, UV-Absorber, Stabilisatoren oder dergleichen. Auch Zusätze zur Erhöhung der Leitfähigkeit (z.B. Graphit-Pulver, Silber-Pulver etc.) verdienen in diesem Zusammenhang Erwähnung. Im Falle der Verwendung als Formmasse kommt insbesondere die Zugabe von anorganischen und/oder organischen Füllstoffen in Frage, wie z.B. (Glas-) Fasern, Mineralien etc.

Die endgültige Härtung der Poly(hetero)kondensate erfolgt durch Polymerisation der polymerisierbaren Gruppen nach Zugabe geeigneter Initiatoren z.B. thermisch, photochemisch oder redox-induziert. Dabei werden im Zuge einer anionischen und/oder kovalent-nucleophilen Polymerisation die Ringe der Carbonat-Gruppen geöffnet und es wird das organische Netzwerk aufgebaut. Überraschenderweise wurde festgestellt, daß sich im Laufe dieser Polymerisation das Volumen der Poly(hetero)kondensate nur geringfügig ändert. In Abhängigkeit von der Zahl der Carbonat-Gruppen wird eine nur geringfügige Volumenabnahme erhalten, wobei mit steigender Zahl der Carbonat-Gruppen die Volumenabnahme geringer wird. Mit Hilfe der erfindungsgemäßen Carbonat-Silane ist es also möglich geworden, (jeweils biologisch abbaubare) Beschichtungen, Füll- und Formkörper sowie Klebe- und Dichtungsmassen etc. auf der Basis von Kieselsäure(hetero)kondensaten zu erhalten, die bei der Härtung einen reduzierten Härtungsschrumpf erleiden.

Es ist aber auch möglich, dem Poly(hetero)kondensat vor der endgültigen Härtung, also vor der Polymerisation weitere ionisch und/oder radikalisch polymerisierbare Komponenten zuzusetzen. Radikalisch polymerisierbare Verbindungen, die zugesetzt werden können, sind z.B. solche mit C=C-Doppelbindungen, wie etwa Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch ringöffnend polymerisieren, wie etwa Spiroorthoester, Spiroorthocarbonate, bicyclische Spiroorthoester, Mono- oder Oligoepoxide. Es können aber auch Verbindungen zugesetzt werden, die sowohl kationisch als auch radikalisch polymerisierbar sind, wie z.B. Methacryloyl-Spiroorthoester. Diese polymerisieren radikalisch über die C=C-Doppelbindung und kationisch unter Ringöffnung. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Erfolgt die Härtung des Poly(hetero)kondensates photochemisch, so werden Photoinitiatoren zugesetzt, bei thermischer Härtung thermische Initiatoren.

Geeignete Initiatoren sind z.B. s-BuLi, $Sn(Bu)_2(OCH_3)_2$, $Zn(C_2H_5)_2$, $Al(O\text{-}s\text{-}Bu)_3$, $Mg(Bu)_2$, $Bu_4NF \cdot 3H_2O$ (TBAF), $[(CH_3)_2N]_3SSi(CH_3)_3F_2$ (TASF), $BF_3O(C_2H_5)_2$, $F_3CSO_3H$, $F_3CSO_3CH_3$, $SnCl_4$, $SnBr_4$, $TiCl_4$, $Bu_2SnBr_2$, $Bu_3SnOCH_3$, sowie folgende Porphyrin-Derivate mit R = Cl, $OCH_3$, $OCH_2CH_2OC_6H_5$, oder $OCH(CH_3)CH_2Cl$, sowie

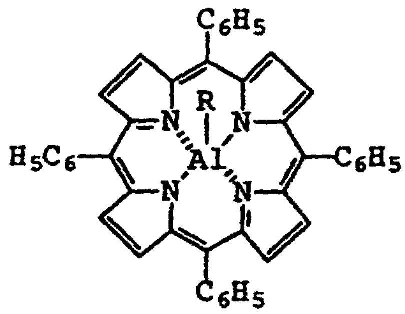

Die Härtung kann auch, z.B. in Zwei-Komponenten-Systemen, mittels Diaminen erfolgen, wobei in Anhängigkeit der Reaktivität dieser Amine die Härtung bei Raumtemperatur oder bei erhöhter Temperatur durchgeführt wird.

Der Initiator kann in üblichen Mengen zugegeben werden. So kann z.B. einer Mischung, die 30 bis 50 Gew.-% Feststoff (Polykondensat) enthält, Initiator in einer Menge von z.B. 0.5 bis 5 Gew.-%, insbesondere von 1 bis 3 Gew.-%, bezogen auf die Mischung zugesetzt, werden.

Werden zur Herstellung der Poly(hetero)kondensate neben den erfindungsgemäßen Carbonat-Silanen weitere Komponenten eingesetzt, die reaktive Doppelbindungen enthalten, wie z.B. Silane gemäß der allgemeinen Formel IV, so kann über diese Doppelbindungen ebenfalls eine z.B. thermisch oder photochemisch initiierte Polymerisation ablaufen.

Als Photoinitiatoren können z.B. die im Handel erhältlichen eingesetzt werden. Beispiel hierfür sind Irgacure 184 (1-Hydroxycyclohexylphenylketon), Irgacure 500 (1-Hydroxycyclohexylphenylketon/Benzophenon), und andere von Ciba-Geigy erhältliche Photoinitiatoren vom Irgacure-Typ; Darocure 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4.4'-Dimethoxybenzoin etc.

Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, t-Butylperbenzoat und Azobisisobutyronitril.

Ein mit einem Initiator versehener Lack (Poly(hetero)kondensat) auf der Basis der erfindungsgemäßen Carbonat-Silane kann dann z.B. für die Beschichtung von Substraten eingesetzt werden. Für diese Beschichtung können übliche Beschichtungsverfahren angewendet werden, z.B. Tauchen, Fluten, Gießen, Schleudern, Walzen, Spritzen, Aufstreichen, elektrostatisches Spritzen und Elektrotauchlackierung. Erwähnt werden soll hier noch, daß der Lack nicht notwendigerweise lösungsmittelhaltig sein muß. Insbesondere bei Verwendung von Ausgangssubstanzen (Silanen) mit zwei Alkoxy-Gruppen am Si-Atom kann auch ohne Zusatz von Lösungsmitteln gearbeitet werden.

Vor der Härtung läßt man den aufgetragenen Lack vorzugsweise abtrocknen. Danach kann er, abhängig von der Art des Initiators, thermisch oder photochemisch in an sich bekannter Weise gehärtet werden. Selbstverständlich sind auch Kombinationen von Aushärtungsmethoden möglich.

Erfolgt die Härtung des aufgetragenen Lackes durch Bestrahlen kann es sich von Vorteil erweisen, nach der Strahlungshärtung eine thermische Härtung durchzuführen, insbesondere um noch vorhandenes Lösungsmittel zu entfernen oder um noch weitere reaktive Gruppen in die Härtung miteinzubeziehen.

Obwohl in den Poly(hetero)kondensaten auf der Basis der erfindungsgemäßen Carbonat-Silane bereits polymerisierbare Gruppen vorhanden sind, kann es sich in bestimmten Fällen als vorteilhaft erweisen, diesen Kondensaten vor oder bei ihrer Weiterverarbeitung (Härtung) noch weitere Verbindungen (vorzugsweise rein organischer Natur) mit ungesättigten Gruppen zuzugeben. Bevorzugte Beispiele für derartige Verbindungen sind Acrylsäure und Methacrylsäure sowie davon abgeleitete Verbindungen, insbesondere Ester von vorzugsweise einwertigen Alkoholen (z. B. $C_{1-4}$-Alkanolen), (Meth)acrylnitril, Styrol und Mischungen derselben. Im Fall der Verwendung der Poly(hetero)kondensate zur Herstellung eines Beschichtungslackes können derartige Verbindungen gleichzeitig als Lösungs- bzw. Verdünnungsmittel wirken.

Die Herstellung von Formkörpern bzw. Formmassen aus Poly(hetero)kondensaten auf der Basis der erfindungsgemäßen Carbonat-Silane kann mit jeder auf diesem Gebiet gebräuchlichen Methode erfolgen, z.B. durch Spritzguß, Formgießen, Extrusion etc.. Auch zur Herstellung von Kompositmaterialien (z.B. mit Glasfaserverstärkung) sind die Poly(hetero)kondensate auf der Basis der erfindungsgemäßen Carbonat-Silane geeignet.

Eine weitere Anwendungsmöglichkeit finden die erfindungsgemäßen Carbonat-Silane bei der Herstellung von hydrolytisch kondensierbaren Polymerisaten. Dazu werden die erfindungsgemäßen Carbonat-Silane alleine oder zusammen mit anderen radikalisch und/oder ionisch und/oder kovalent-nucleophil polymerisierbaren Komponenten

polymerisiert, wobei die endgültige Härtung dann durch hydrolytische Kondensation über die hydrolysierbaren Gruppen der erfindungsgemäßen Carbonat-Silane und eventuell weiterer, hydrolysierbarer Komponenten erfolgt. In diesem Fall wird zuerst durch Polymerisation das organische Netzwerk aufgebaut und dann durch hydrolytische Kondensation das anorganische.

Die Herstellung der Polymerisate erfolgt durch ionische oder kovalent-nucleophile Polymerisation einer oder mehrerer Carbonat-Gruppen-haltiger Verbindungen und gegebenenfalls anderer, ionisch und/oder kovalent-nucleophil polymerisierbarer Verbindungen, und gegebenenfalls durch radikalische Polymerisation einer oder mehrerer radikalisch polymerisierbaren Verbindungen, gegebenenfalls durch Einwirkung von Wärme oder elektromagnetischer Strahlung und gegebenenfalls in Anwesenheit eines oder mehrerer Initiatoren und/oder eines Lösungsmittels, und ist dadurch gekennzeichnet, daß 5 bis 100 Molprozent, auf der Basis monomerer Verbindungen, der Carbonat-Gruppen-haltigen Verbindungen aus den erfindungsgemäßen Silanen der allgemeinen Formel I ausgewählt werden.

Es ist aber auch möglich, den erfindungsgemäßen Carbonat-Silanen vor der Polymerisation weitere ionisch und/oder radikalisch und/oder kovalent-nucleophil polymerisierbare Komponenten zuzusetzen. Radikalisch polymerisierbare Verbindungen, die zugesetzt werden können, sind z.B. solche mit C=C-Doppelbindungen, wie etwa Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch, ringöffnend polymerisierbar sind, wie etwa Spiroorthoester, Spiroorthocarbonate, bicyclische Spiroorthoester, Mono- oder Oligoepoxide. Es können aber auch Verbindungen zugesetzt werden, die sowohl kationisch als auch radikalisch polymerisierbar sind, wie z.B. Methacryloyl-Spiroorthoester. Diese sind radikalisch über die C=C-Doppelbindung und kationisch unter Ringöffnung polymerisierbar. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Ferner können den erfindungsgemäßen Carbonat-Silanen vor der Polymerisation weitere hydrolysierbare und polymerisierbare Verbindungen des Siliciums zugesetzt werden, gegebenenfalls in vorkondensierter Form, die dann mit einpolymerisiert werden. Solche Silicium-Verbindungen leiten sich z.B. von Epoxid-haltigen Silanen ab, sind deshalb kationisch polymerisierbar und werden u.a. für die Herstellung der erfindungsgemäßen Carbonat-Silane eingesetzt. Diese Systeme sind bereits bei der Herstellung der erfindungsgemäßen Carbonat-Silane beschrieben.

Es können aber auch Silicium-Verbindungen eingesetzt werden, die sich z.B. von solchen der allgemeinen Formeln III und/oder IV ableiten und z.B. ionisch bzw. radikalisch polymerisierbar sind. Diese Systeme sind bei der Herstellung der Poly(hetero)kondensate bereits näher beschrieben worden.

Die Polymerisation erfolgt z.B. thermisch, photochemisch oder redox-induziert nach Zugabe geeigneter Initiatoren. Dabei werden im Zuge einer ionischen oder kovalent-nucleophilen Polymerisation die Ringe der Carbonat-Gruppen und gegebenenfalls weitere polymerisierbare Ringe geöffnet, und gegebenenfalls erfolgt auch eine radikalische Polymerisation durch Verknüpfung von Doppelbindungen. Dabei wird das organische Netzwerk aufgebaut. Überraschenderweise wurde festgestellt, daß sich im Laufe dieser Polymerisation das Volumen der Reaktionsmasse nur geringfügig ändert. In Abhängigkeit von der Zahl der Carbonat-Gruppen wird eine nur geringfügige Volumenabnahme erhalten, wobei mit steigender Zahl der Carbonat-Gruppen die Volumenabnahme geringer wird.

Erfolgt die Polymerisation photochemisch, so werden der Reaktionsmasse ionische Photoinitiatoren zugesetzt, bei thermischer Polymerisation thermische Initiatoren. Geeignete Initiatoren sind bereits bei der Härtung der Poly(hetero)kondensate ausführlich beschrieben worden.

Wurden den erfindungsgemäßen Carbonat-Silanen Komponenten mit Doppelbindungen zugesetzt, so kann über diese ebenfalls eine Polymerisation ablaufen, die z.B. thermisch oder photochemisch initiierbar ist.

Als Photoinitiatoren hierfür können z.B. die im Handel erhältlichen eingesetzt werden. Beispiel dazu wurden bereits bei der Härtung der Poly(hetero)kondensate genannt. Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete Beispiele hierfür wurden ebenfalls bereits bei der Härtung der Poly(hetero)kondensate genannt.

Der Initiator kann in üblichen Mengen zugegeben werden. So kann z.B. einer Mischung, die 30 bis 50 Gew.-% Feststoff (Polykondensat) enthält, Initiator in einer Menge von z.B. 0.5 bis 5 Gew.-%, insbesondere von 1 bis 3 Gew.-%, bezogen auf die Mischung zugesetzt, werden.

Das auf diese Weise erhaltene Polymerisat kann man nun zum Aufbau des anorganischen Netzwerkes, gegebenenfalls in Anwesenheit weiterer, hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, durch Einwirkung von Wasser oder Feuchtigkeit, gegebenenfalls in Anwesenheit eines Katalysators und/oder eines Lösungsmittels, hydrolytisch kondensieren.

Im Gegensatz zur hydrolytischen Kondensation der erfindungsgemäßen Carbonat-Silane kann die hydrolytische Kondensation des Polymerisates auch im sauren Milieu durchgeführt werden. Die Polymerisate enthalten hydrolysierbare Gruppen X, z.B. Alkoxy-Gruppen, so daß damit ein anorganisches Netzwerk (SiO-Si-Einheiten) aufgebaut werden kann.

Unter den gegebenenfalls eingesetzten hydrolysierbaren Verbindungen des Siliciums sind solche der allgemeinen Formel II, gegebenenfalls in vorkondensierter Form, bevorzugt. Diese Systeme wurden bereits bei der Herstellung der erfindungsgemäßen Poly(hetero)kondensate ausführlich beschrieben und mit konkreten Beispielen belegt.

Die gegebenenfalls eingesetzten hydrolysierbaren Aluminium-, Titan- und Zirkonium-Verbindungen sind bereits bei der Herstellung der erfindungsgemäßen Poly(hetero)kondensate ausführlich abgehandelt worden.

Weitere hydrolysierbare Verbindungen, die dem Polymerisat zugesetzt werden können, sind z.B. Bortrihalogenide und Borsäureester, wie z.B. $BCl_3$, $B(OCH_3)_3$ und $B(OC_2H_5)_3$, Zinntetrahalogenide und Zinntetraalkoxide, wie z.B. $SnCl_4$ und $Sn(OCH_3)_4$, und Vanadyl-Verbindungen, wie z.B. $VOCl_3$ und $VO(OCH_3)_3$.

Auch hier kann, wie bereits erwähnt, die hydrolytische Kondensation in auf diesem Gebiet üblicher Art und Weise erfolgen. Die hydrolytische Kondensation kann in den meisten Fällen dadurch erfolgen, daß man dem zu hydrolysierenden Polymerisat, das entweder als solches oder gelöst in einem geeigneten Lösungsmittel vorliegt, das erforderliche Wasser bei Raumtemperatur oder unter leichter Kühlung direkt zugibt, vorzugsweise unter Rühren und in Anwesenheit eines Hydrolyseund Kondensationskatalysators.

Bei Anwesenheit der reaktiven Verbindungen von Al, Ti oder Zr empfielt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingestzten Ausgangsverbindungen ab. So kann man z.B. das gelöste Polymerisat langsam zu einem Überschuß an Wasser tropfen oder man gibt Wasser in einer Portion oder portionsweise dem gegebenenfalls gelösten Polymerisat zu. Es kann auch nützlich sein, das Wasser nicht als solches zuzugeben, sondern mit Hilfe von wasserhaltigen organischen oder anorganischen Systemen in das Reaktionssystem einzutragen.

Die erfindungsgemäßen Carbonat-Silane können durch Reaktion an der Carbonatgruppe weiter modifiziert werden. So können z.B. Amine unter Bildung einer Amidgruppierung addiert werden, und es resultieren hydrolysierbare und kondensierbare Amid-Silane, die zur Herstellung von Kieselsäurepolykondensaten bzw. Kieselsäureheteropolykondensaten eingesetzt werden können. Werden Diamine addiert, so resultieren Disilane.

Es ist aber auch möglich, die erfindungsgemäßen Carbonat-Silane zunächst durch hydrolytische Kondensation zu Kieselsäurepolykondensaten bzw. Kieselsäureheteropolykondensaten zu verarbeiten und diese Kondensate dann durch Addition von Aminen, insbesondere von Diaminen, zu vernetzen, d.h. zu härten. Die erfindungsgemäßen Carbonat-Silane können so z.B. zur Herstellung von Zwei-Komponenten-Systemen eingesetzt werden.

An Hand von Ausführungsbeispielen wird die Erfindung näher erläutert.

Beispiel 1:

Darstellung des 2-Oxo-1.3-dioxolan-4-methylenoxypropyltrimethoxysilan

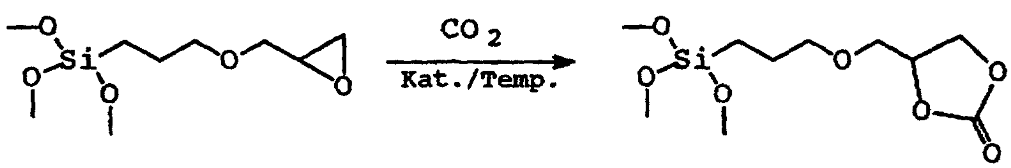


Zur Vorlage von 61.2 g 3-Glycidyloxypropyltrimethoxysilan (0.258 mol) wird nach Zusatz eines Katalysators (LiI/DABCO) $CO_2$ eingeleitet und die resultierende Mischung auf 100 °C erhitzt. Die Umsetzung wird über eine Epoxid-Titration oder gaschromatographisch verfolgt. Bei einem Umsatz > 95 % wird die Reaktion abgebrochen und das resultierende Produkt durch Destillation isoliert oder direkt für weitere Umsetzungen eingesetzt.

| | | |
|---|---|---|
| IR | $\nu_{(C\text{-}H,\ allg.)}$ | = 2960 - 2840 $cm^{-1}$ |
| | $\nu_{(OCH_3)}$ | = 2843 $cm^{-1}$ |
| | $\nu_{(C=O,\ Carbonat)}$ | = 1798 $cm^{-1}$ |
| Sdp. | ca. 118 °C (0.06 Torr) | |
| GC | Retentionszeit ca. 14.4 min (220 °C) | |

Wird die Addition unter Druck, d.h. in einem Autoklaven durchgeführt, verkürzt sich die Reaktionszeit erheblich.

Beispiel 2 :

Darstellung des 2-Oxo-1.3-dioxolan-4-methylenoxypropyl(methyl)dimethoxysilan

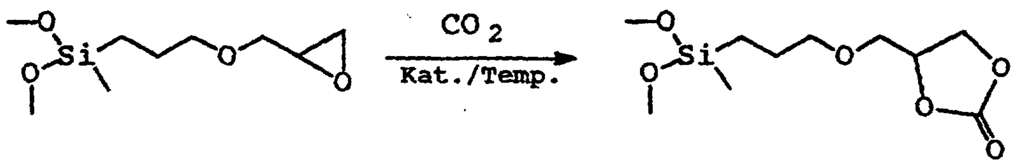


Zur Vorlage von 60.0 g 3-Glycidyloxypropyl(methyl)dimethoxysilan (0.242 mol) wird nach Zusatz eines Katalysators (LiI/DABCO) $CO_2$ eingeleitet und die resultierende Mischung auf 100 °C erhitzt. Die Umsetzung wird über eine Epoxid-Titration oder gaschromatographisch verfolgt. Bei einem Umsatz > 95 % wird die Reaktion abgebrochen und das resultierende Produkt durch Destillation isoliert oder direkt für weitere Umsetzungen eingesetzt.

| | | |
|---|---|---|
| IR | $\nu_{(C-H,\ allg.)}$ | = 2960 - 2840 $cm^{-1}$ |
| | $\nu_{(OCH_3)}$ | = 2843 $cm^{-1}$ |
| | $\nu_{(C=O,\ Carbonat)}$ | = 1798 $cm^{-1}$ |
| Sdp. | ca. 125 °C (0.08 Torr) | |
| GC | Retentionszeit ca. 15.3 min (220 °C) | |

Wird die Addition unter Druck, d.h. in einem Autoklaven durchgeführt, verkürzt sich die Reaktionszeit erheblich.

Beispiel 3 :

Darstellung eines Disilans durch Aminaddition bzw. Vernetzung über die Carbonat-Gruppe vor der Hydrolyse und Kondensation des Silans, d.h. nachträgliche Hydrolyse und Kondensation (Härtung) erforderlich. Bezüglich der Stellung der OH-Gruppe sind in Abhängigkeit von der Ringöffnung Isomere möglich.

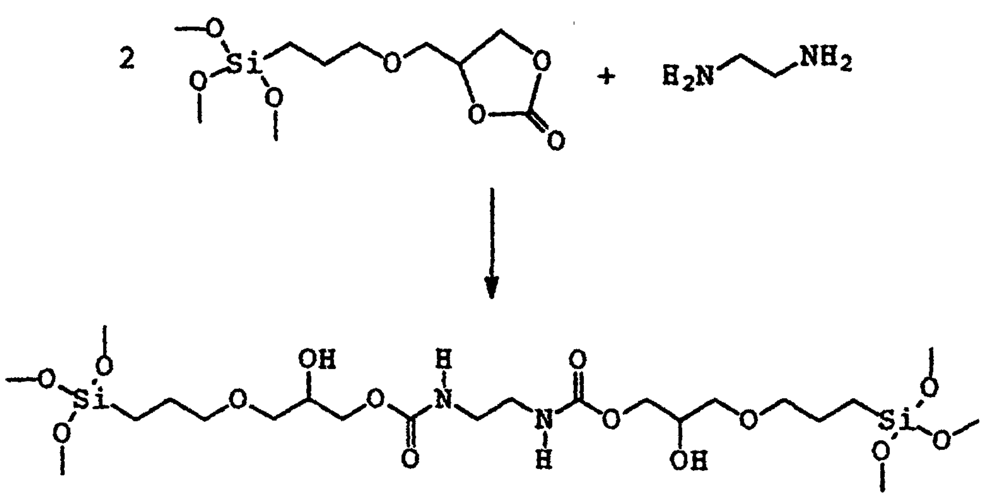

Zur Vorlage von 6.0 g 2-Oxo-1.3-dixolan-4-methylenoxypropyltrimethoxysilan (21.4 mmol) werden unter Rühren 0.61 g (10.7 mmol) Ethylendiamin gegeben. Die Umsetzung ist bei Raumtemperatur nach etwa 20 Stunden vollendet und wird mittels IR verfolgt.

| | |
|---|---|
| $\nu_{(C=O,\ Carbonat)}$<br>$\nu_{(C=O,\ Amid)}$<br>$\nu_{(OH)}$ | = 1798 $cm^{-1}$<br>= 1720 / 1707 $cm^{-1}$<br>≈ 3351 $cm^{-1}$ |

Das Silan kann direkt zur Hydrolyse und Kondensation eingesetzt werden und ergibt nach Abzug der flüchtigen Bestandteile (therm.) z.B. eine klebfreie gehärtete Beschichtung.

Der umgekehrte Weg, d.h. zuerst Hydrolyse und Kondensation der $Si(OR)_3$-Gruppen, führt zur Härtung durch die Aminaddition (= Vernetzung). Je nach Reaktivität der Aminogruppen findet die Reaktion schon bei Raumtemperatur oder erst bei Temperaturerhöhung statt. Damit sind die erfindungsgemäßen Silane in 2-Komponenten-Systemen verwendbar.

## Patentansprüche

1. Hydrolysierbare und polymerisierbare Silane der allgemeinen Formel I,

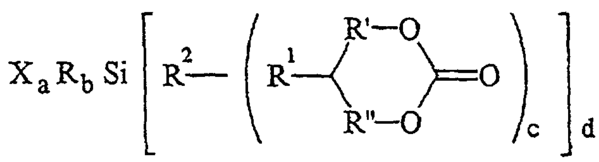

(I)

in der die Reste und Indices gleich oder verschieden sind und folgende Bedeutung haben:

X = Wasserstoff, Halogen, Hydroxy, Alkoxy, Acyloxy, Alkylcarbonyl, Alkoxycarbonyl oder $NR^3_2$;, mit $R^3$ = Wasserstoff, Alkyl oder Aryl;
R = Alkyl, Alkenyl, Aryl, Alkylaryl oder Arylalkyl;
R' = Alkylen, Arylen, Arylenalkylen oder Alkylenarylen mit jeweils 0 bis 10 Kohlenstoffatomen für c+d>2 und mit jeweils 1 bis 10 Kohlenstoffatomen für c+d=2, wobei diese Reste durch Sauerstoff- und Schwefelatome oder durch Amino-Gruppen unterbrochen sein können
R" = Alkylen, Arylen, Arylenalkylen oder Alkylenarylen mit jeweils 1 bis 10 Kohlenstoffatomen, wobei diese Reste durch Sauerstoff- und Schwefelatome oder durch Aminogruppen unterbrochen sein können;
$R^1$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können
$R^2$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-bzw. -NH-CO-O-Gruppen unterbrochen sein können
a = 1, 2 oder 3;
b = 0, 1 oder 2;
c = 1, 2, 3, 4, 5 oder 6;
d = 4 - a - b
a+b = 1, 2 oder 3.

2. Silane gemäß Anspruch 1, **dadurch gekennzeichnet,** daß die Einheit mit dem Index c oder d ein gegebenenfalls substituiertes Dioxolanon oder Dioxanon darstellt.

3. Silane gemäß Anspruch 2, **dadurch gekennzeichnet,** daß die Einheit mit dem Index c oder d

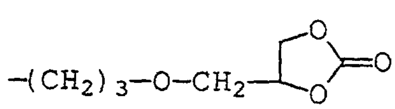

oder

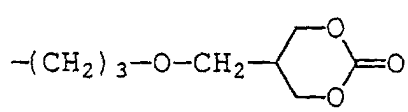

ist.

**4.** Verfahren zur Herstellung von Silanen der allgemeinen Formel I,

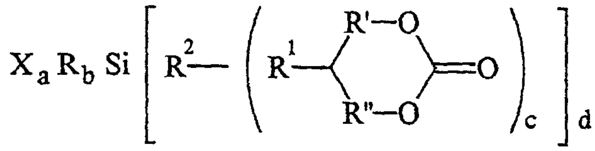

(I)

in der die Reste und Indices gleich oder verschieden sind und folgende Bedeutung haben,

X = Wasserstoff, Halogen, Hydroxy, Alkoxy, Acyloxy, Alkylcarbonyl, Alkoxycarbonyl oder $NR^3_2$;, mit $R^3$ = Wasserstoff, Alkyl oder Aryl,
R = Alkyl, Alkenyl, Aryl, Alkylaryl oder Arylalkyl,
R' = Alkylen, Arylen, Arylenalkylen oder Alkylenarylen mit jeweils 0 bis 10 Kohlenstoffatomen, wobei diese Reste durch Sauerstoff- und Schwefelatome oder durch AminoGruppen unterbrochen sein können,
R" = Alkylen, Arylen, Arylenalkylen oder Alkylenarylen mit jeweils 1 bis 10 Kohlenstoffatomen, wobei diese Reste durch Sauerstoff- und Schwefelatome oder durch Amino-gruppen unterbrochen sein können,
$R^1$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können,
$R^2$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können,
a = 1, 2 oder 3,
b = 0, 1 oder 2,
c = 1, 2, 3, 4, 5 oder 6,
d = 4 - a - b,
a+b = 1, 2 oder 3,

**dadurch gekennzeichnet,** daß man ein Silan der allgemeinen Formel V,

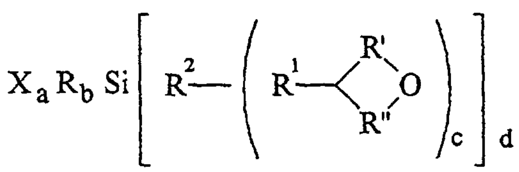

(V)

in der die Reste und Indices die oben genannte Bedeutung haben, einer Carboxylierung unterwirft.

**5.** Verfahren gemäß Anspruch 4, **dadurch gekennzeichnet,** daß man ein gegebenenfalls substituiertes Silan der Formel V' einsetzt,

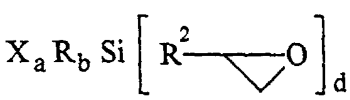

(V')

in der die Reste und Indices gleich oder verschieden sind und die in Anspruch 4 genannte Bedeutung haben.

**6.** Verfahren zur Herstellung von Silanen der allgemeinen Formel I',

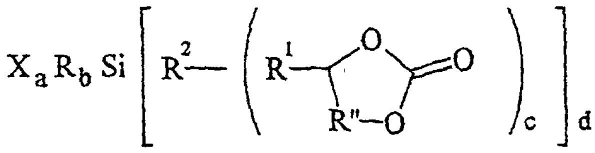

(I')

in der die Reste und Indices gleich oder verschieden sind und folgende Bedeutung haben,

| | |
|---|---|
| X = | Wasserstoff, Halogen, Hydroxy, Alkoxy, Acyloxy, Alkylcarbonyl, Alkoxycarbonyl oder $NR^3_2$;, mit $R^3$ = Wasserstoff, Alkyl oder Aryl, |
| R = | Alkyl, Alkenyl, Aryl, Alkylaryl oder Arylalkyl, |
| R" = | Alkylen, Arylen, Arylenalkylen oder Alkylenarylen mit jeweils 1 bis 10 Kohlenstoffatomen, wobei diese Reste durch Sauerstoff- und Schwefelatome oder durch Aminogruppen unterbrochen sein können, |
| $R^1$ = | Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können, |
| $R^2$ = | Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können, |
| a = | 1, 2 oder 3, |
| b = | 0, 1 oder 2, |
| c = | 1, 2, 3, 4, 5 oder 6, |
| d = | 4 - a - b, |
| a+b = | 1, 2 oder 3, |

**dadurch gekennzeichnet,** daß man ein Silan der allgemeinen Formel VI,

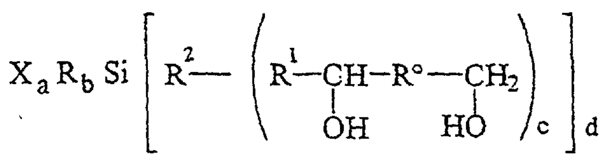

(VI)

in der R° Alkylen, Arylen, Arylenalkylen oder Alkylenarylen mit jeweils 0 bis 9 Kohlenstoffatomen bedeutet, wobei diese Reste durch Sauerstoff- und Schwefelatome oder durch Aminogruppen unterbrochen sein können, und in der die übrigen Reste und Indices die oben genannte Bedeutung haben, mit einem Carbonat der allgemeinen Formel $R^4$-O-CO-O-$R^4$ umsetzt, in der die Reste $R^4$ gleich oder verschieden sind und Alkyl, Aryl, Arylalkylen oder Alkylarylen mit jeweils 1 bis 10 Kohlenstoffatomen bedeuten, wobei diese Reste durch Sauerstoff-und Schwefelatome oder durch Aminogruppen unterbrochen sein können.

7. Verfahren nach Anspruch 6, **dadurch gekennzeichnet,** daß man ein gegebenenfalls substituiertes Silan der allgemeinen Formel VI'

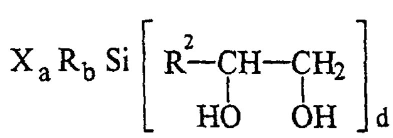

(VI')

einsetzt, in der die Reste und Indices gleich oder verschieden sind und die in Anspruch 6 genannte Bedeutung haben.

8. Verfahren zur Herstellung von Silanen der allgemeinen Formel I",

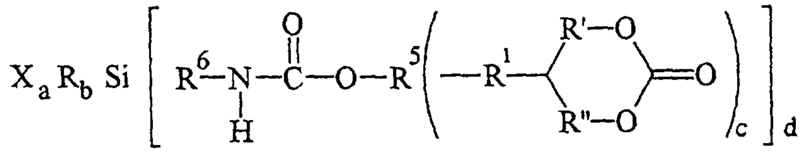

(I")

in der die Reste und Indices gleich oder verschieden sind und folgende Bedeutung haben,

X = Wasserstoff, Halogen, Hydroxy, Alkoxy, Acyloxy, Alkylcarbonyl, Alkoxycarbonyl oder $NR^3_2$;, mit $R^3$ = Wasserstoff, Alkyl oder Aryl,
R = Alkyl, Alkenyl, Aryl, Alkylaryl oder Arylalkyl,
R' = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können,
R" = Alkylen, Arylen, Arylenalkylen oder Alkylenarylen mit jeweils 1 bis 10 Kohlenstoffatomen, wobei diese Reste durch Sauerstoff- und Schwefelatome oder durch Aminogruppen unterbrochen sein können,
$R^1$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können,
$R^5$ = Alkylen, Arylen, Arylenalkylen oder Alkylenarylen mit jeweils 0 bis 8 Kohlenstoffatomen, wobei diese Reste durch Sauerstoff- und Schwefelatome oder durch Amino-Gruppen unterbrochen sein können, und wobei die Summe der Kohlenstoffatome der Reste $R^5$ und $R^6$ 9 nicht übersteigt,
$R^6$ = Alkylen, Arylen, Arylenalkylen oder Alkylenarylen mit jeweils 1 bis 8 Kohlenstoffatomen, wobei diese Reste durch Sauerstoff- und Schwefelatome oder durch Amino-Gruppen unterbrochen sein können, und wobei die Summe der Kohlenstoffatome der Reste $R^5$ und $R^6$ 9 nicht übersteigt,
a = 1, 2 oder 3,
b = 0, 1 oder 2,
c = 1, 2, 3, 4, 5 oder 6,
d = 4 - a - b,
a+b = 1, 2 oder 3,

**dadurch gekennzeichnet,** daß man einen gegebenenfalls substituierten Alkohol der allgemeinen Formel VIII,

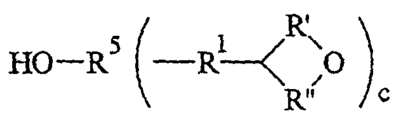

(VIII)

in der die Reste und Indices gleich oder verschieden sind und die oben genannte Bedeutung haben, einer Carboxylierung unterwirft, und das Reaktionsprodukt an ein Silan der allgemeinen Formel $X_aR_bSi(R^6\text{-}NCO)_d$ addiert, in der die Reste und Indices ebenfalls gleich oder verschieden sind und die oben genannte Bedeutung haben.

**9.** Verfahren nach Anspruch 8, **dadurch gekennzeichnet,** daß man einen Alkohol der allgemeinen Formel VIII' einsetzt,

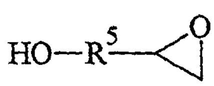

(VIII')

in der der Rest $R^5$ die in Anspruch 8 genannte Bedeutung hat.

**10.** Verwendung der Silane der allgemeinen Formel I,

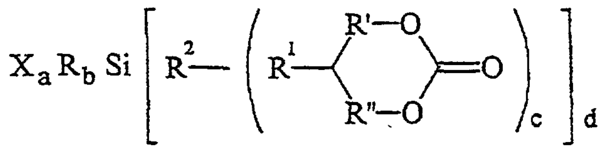

(I)

in der die Reste und Indices gleich oder verschieden sind und folgende Bedeutung haben,

X = Wasserstoff, Halogen, Hydroxy, Alkoxy, Acyloxy, Alkylcarbonyl, Alkoxycarbonyl oder $NR^3_2$;, mit $R^3$ = Wasserstoff, Alkyl oder Aryl,
R = Alkyl, Alkenyl, Aryl, Alkylaryl oder Arylalkyl,
R' = Alkylen, Arylen, Arylenalkylen oder Alkylenarylen mit jeweils 0 bis 10 Kohlenstoffatomen, wobei diese Reste durch Sauerstoff- und Schwefelatome oder durch AminoGruppen unterbrochen sein können,
R" = Alkylen, Arylen, Arylenalkylen oder Alkylenarylen mit jeweils 1 bis 10 Kohlenstoffatomen, wobei diese Reste durch Sauerstoff- und Schwefelatome oder durch Amino-gruppen unterbrochen sein können,
$R^1$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können,
$R^2$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-bzw. -NH-CO-O-Gruppen unterbrochen sein können,
a = 1, 2 oder 3,
b = 0, 1 oder 2,
c = 1, 2, 3, 4, 5 oder 6,
d = 4 - a - b,
a+b = 1, 2 oder 3,

zur Herstellung von Kieselsäurepolykondensaten oder von Kieselsäureheteropolykondensaten durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels, durch Einwirkung von Wasser oder Feuchtigkeit, **dadurch gekennzeichnet,** daß 5 bis 100 Molprozent, auf der Basis monomerer Verbindungen, der hydrolytisch kondensierbaren Verbindungen aus Silanen der allgemeinen Formel I ausgewählt werden.

**11.** Verwendung nach Anspruch 10, **dadurch gekennzeichnet,** daß man als weitere hydrolytisch kondensierbare Verbindungen radikalisch und/oder ionisch und/oder kovalent-nucleophil polymerisierbare Verbindungen einsetzt, gegebenenfalls in vorkondensierter Form.

**12.** Verwendung nach Anspruch 10 oder 11, **dadurch gekennzeichnet,** daß man als weitere hydrolytisch kondensierbare Verbindungen des Siliciums eine oder mehrere Verbindungen der allgemeinen Formel II, gegebenenfalls in vorkondensierter Form, einsetzt,

$$R_a(R''Z')_bSiX_{4-(a+b)} \qquad (II)$$

in der die Reste R, R" und Z' gleich oder verschieden sind und folgende Bedeutung haben:

R = Alkyl, Alkenyl, Aryl, Alkylaryl oder Arylalkyl,
R" = Alkylen oder Alkenylen, wobei diese Reste durch Sauerstoff- oder Schwefelatome oder -NH-Gruppen unterbrochen sein können,
X = Wasserstoff, Halogen, Hydroxy, Alkoxy, Acyloxy, Alkylcarbonyl, Alkoxycarbonyl oder $NR^3_2$, mit R' = Wasserstoff, Alkyl oder Aryl,
Z' = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe,
a = 0, 1, 2, oder 3,

b = 0, 1, 2, oder 3, mit a+b = 1,2 oder 3.

**13.** Verwendung nach einem oder mehreren der Ansprüche 10 bis 12, **dadurch gekennzeichnet,** daß man als weitere hydrolytisch kondensierbare Verbindungen des Siliciums eine oder mehrere Verbindungen der allgemeinen Formel III, gegebenenfalls in vorkondensierter Form, einsetzt,

$$Y_n\ Si\ X_m\ R_{4-(n+m)} \qquad (III)$$

in der die Reste X, Y und R gleich oder verschieden sind und folgende Bedeutung haben:

R = Alkyl, Alkenyl, Aryl, Alkylaryl oder Arylalkyl,
X = Wasserstoff, Halogen, Hydroxy, Alkoxy, Acyloxy, Alkylcarbonyl, Alkoxycarbonyl oder $NR^3_2$, mit $R^3$ = Wasserstoff, Alkyl oder Aryl,
Y = ein Substituent, der einen substituierten oder unsubstituierten 1,4,6-Trioxaspiro-[4,4]-nonan-Rest enthält,
n = 1, 2 oder 3,
m = 1, 2 oder 3, mit $n+m \leq 4$.

**14.** Verwendung nach einem oder mehreren der Ansprüche 10 bis 13, **dadurch gekennzeichnet,** daß man als weitere hydrolytisch kondensierbare Verbindungen des Siliciums eine oder mehrere Verbindungen der allgemeinen Formel IV, gegebenenfalls in vorkondensierter Form, einsetzt,

$$\{X_nR_kSi[(R^2A)_1]_{4-(n+k)}\}_xB \qquad (IV)$$

in der die Reste A, R, $R^2$ und X gleich oder verschieden sind und folgende Bedeutung haben:

A = O, S, PR', POR', NHC(O)O, oder NHC(O)NR', mit R' = Wasserstoff, Alkyl oder Aryl,
B = geradkettiger oder verzweigter organischer Rest, der sich von einer Verbindung B' mit mindestens einer (für 1 = 1 und A = NHC(O)O oder NHC(O)NR') bzw. mindestens zwei C=C-Doppelbindungen und 5 bis 50 Kohlenstoffatomen ableitet, mit R'= Wasserstoff, Alkyl oder Aryl,
R = Alkyl, Alkenyl, Aryl, Alkylaryl oder Arylalkyl,
$R^2$ = Alkylen, Arylen oder Alkylenarylen,
X = Wasserstoff, Halogen, Hydroxy, Alkoxy, Acyloxy, Alkylcarbonyl, Alkoxycarbonyl oder $NR^3_2$, mit $R^3$ = Wasserstoff, Alkyl oder Aryl,
n = 1, 2 oder 3,
k = 0, 1 oder 2,
l = 0 oder 1,
x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn 1 = 1 und A für NHC(O)O oder NHC(O)NR' steht.

**15.** Verwendung nach Anspruch 14, **dadurch gekennzeichnet,** daß man eine Verbindung der allgemeinen Formel IV einsetzt, in der sich der Rest B von einer substituierten oder unsubstituierten Verbindung B' mit zwei oder mehreren Acrylat- und/ oder Methacrylatgruppen ableitet.

**16.** Verwendung nach einem oder mehreren der Ansprüche 10 bis 15, **dadurch gekennzeichnet,** daß man als weitere hydrolytisch kondensierbare Komponenten eine oder mehrere, im Reaktionsmedium lösliche Aluminium-, Titan- oder Zirkoniumverbindungen, gegebenenfalls in vorkondensierter Form, der allgemeinen Formeln

$$AlR^{\circ}_3 \qquad oder \qquad M\ X_y\ R_z$$

einsetzt, in der M Titan oder Zirkonium bedeutet, die Reste X, R° und R gleich oder verschieden sind, R° Halogen, Hydroxy, Alkoxy oder Acyloxy darstellt, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel I definiert sind.

**17.** Verwendung nach einem oder mehreren der Ansprüche 10 bis 16, **dadurch gekennzeichnet,** daß man dem Polykondensat gegebenenfalls einen oder mehrere Initiatoren zusetzt und das Polykondensat ionisch und/oder radikalisch und/oder kovalent-nucleophil und/oder thermisch und/oder photochemisch und/oder redoxinduziert härtet.

**18.** Verwendung nach einem oder mehreren der Ansprüche 10 bis 17, **dadurch gekennzeichnet,** daß man dem Polykondensat vor der Polymerisation eine oder mehrere radikalisch und/oder ionisch und/oder kovalent-nucleophil polymerisierbare Komponenten zusetzt.

**19.** Verwendung der Silane der allgemeinen Formel I,

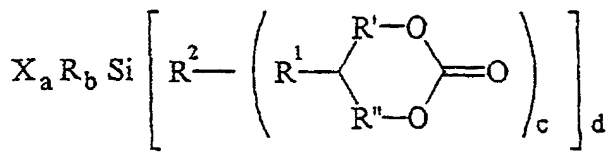

(I)

in der die Reste und Indices gleich oder verschieden sind und folgende Bedeutung haben,

X = Wasserstoff, Halogen, Hydroxy, Alkoxy, Acyloxy, Alkylcarbonyl, Alkoxycarbonyl oder $NR^3_2$;, mit $R^3$ = Wasserstoff, Alkyl oder Aryl,
R = Alkyl, Alkenyl, Aryl, Alkylaryl oder Arylalkyl,
R' = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können,
R" = Alkylen, Arylen, Arylenalkylen oder Alkylenarylen mit jeweils 1 bis 10 Kohlenstoffatomen, wobei diese Reste durch Sauerstoff- und Schwefelatome oder durch Aminogruppen unterbrochen sein können,
$R^1$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-Gruppen unterbrochen sein können,
$R^2$ = Alkylen, Arylen, Arylenalkylen oder Alkylenarylen mit jeweils 0 bis 10 Kohlenstoffatomen, wobei diese Reste durch Sauerstoff- und Schwefelatome oder durch Amino-bzw. -NH-CO-O-Gruppen unterbrochen sein können,
a = 1, 2 oder 3,
b = 0. 1 oder 2,
c = 1, 2, 3, 4, 5 oder 6,
d = 4 - a - b,
a+b = 1, 2 oder 3,

zur Herstellung von Polymerisaten durch ionische und/oder kovalent-nucleophile Polymerisation einer oder mehrerer ionisch und/oder kovalent-nucleophil polymerisierbarer Verbindungen, und gegebenenfalls durch radikalische Polymerisation einer oder mehrerer radikalisch polymerisierbarer Verbindungen, gegebenenfalls durch Einwirkung von Wärme oder elektromagnetischer Strahlung und gegebenenfalls in Anwesenheit eines oder mehrerer Initiatoren und/oder eines Lösungsmittels, **dadurch gekennzeichnet,** daß 5 bis 100 Molprozent, auf der Basis monomerer verbindungen, aus Silanen der allgemeinen Formel I ausgewählt werden.

**20.** Verwendung nach Anspruch 19, **dadurch gekennzeichnet,** daß man als weitere ionisch polymerisierbare Verbindungen eine oder mehrere Siliciumverbindungen der allgemeinen Formel III einsetzt,

$$Y_n\,Si\,X_m\,R_{4-(n+m)} \qquad (III)$$

in der die Reste X, Y und R gleich oder verschieden sind und folgende Bedeutung haben:

R = Alkyl, Alkenyl, Aryl, Alkylaryl oder Arylalkyl,
X = Wasserstoff, Halogen, Hydroxy, Alkoxy, Acyloxy, Alkylcarbonyl, Alkoxycarbonyl oder $NR^3_2$, mit $R^3$ = Wasserstoff, Alkyl oder Aryl,
Y = ein Substituent, der einen substituierten oder unsubstituierten 1,4,6-Trioxaspiro-[4,4]-nonan-Rest enthält,

n = 1, 2 oder 3,
m = 1, 2 oder 3, mit $n+m \leq 4$.

**21.** Verwendung nach Anspruch 19 oder 20, **dadurch gekennzeichnet,** daß man als weitere ionisch polymerisierbare Verbindungen einen oder mehrere Spiroorthoester, Spiroorthocarbonate, bicyclische Spiroorthoester, Methacryloyl-Spiroorthoester, Mono- oder Oligoepoxide einsetzt.

**22.** Verwendung nach einem oder mehreren der Ansprüche 19 bis 21, **dadurch gekennzeichnet,** daß man als radikalisch polymerisierbare Verbindungen eine oder mehrere Siliciumverbindungen der allgemeinen Formel IV einsetzt,

$$\{X_nR_kSi[(R^2A)_1]_{4-(n+k)}\}_xB \qquad (IV)$$

in der die Reste A, R, $R^2$ und X gleich oder verschieden sind und A, R, $R^2$, X, k, l, n und x die in Anspruch 14 genannte Bedeutung haben.

**23.** Verwendung nach einem oder mehreren der Ansprüche 19 bis 22, **dadurch gekennzeichnet,** daß man das Polymerisat, gegebenenfalls in Anwesenheit weiterer, hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, durch Einwirkung von Wasser oder Feuchtigkeit, gegebenenfalls in Anwesenheit eines Katalysators und/oder eines Lösungsmittels, hydrolytisch kondensiert.

**24.** Verwendung nach Anspruch 23, **dadurch gekennzeichnet,** daß man als weitere kondensierbare Verbindungen des Siliciums eine oder mehrere Verbindungen der allgemeinen Formel II, gegebenenfalls in vorkondensierter Form, einsetzt,

$$R_a(R''Z')_bSiX_{4-(a+b)} \qquad (II)$$

in der die Reste R, R" und Z' gleich oder verschieden sind, und R, R", Z', a und b die in Anspruch 12 genannte Bedeutung haben.

**25.** Verwendung der Silane gemäß einem oder mehreren der Ansprüche 1 bis 3 zur Addition an primäre oder sekundäre Amine.

## Claims

**1.** Hydrolysable and polymerisable silanes of the general formula I:

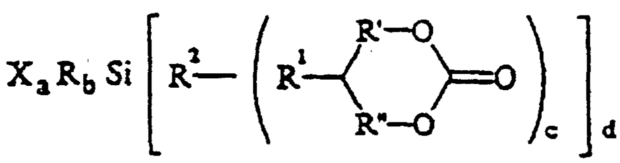

(I)

wherein the residues and indices are the same or different and have the following meaning:

X = hydrogen, halogen, hydroxy, alkoxy, acyloxy, alkylcarbonyl, alkoxycarbonyl or $NR^3_2$; with $R^3$ = hydrogen, alkyl or aryl;
R = alkyl, alkenyl, aryl, alkylaryl or arylalkyl;
R' = alkylene, arylene, arylene alkylene or alkylene arylene having respectively 0 to 10 carbon atoms for c+d>2 and respectively 1 to 10 carbon atoms for c+d=2, these residues being able to be interrupted by oxygen

and sulphur atoms or by amino groups;

R" = alkylene, arylene, arylene alkylene or alkylene arylene having respectively 1 to 10 carbon atoms, these residues being able to be interrupted by oxygen and sulphur atoms or by amino groups;

$R^1$ = alkylene, arylene, arylene alkylene or alkylene arylene having respectively 0 to 10 carbon atoms, these residues being able to be interrupted by oxygen and sulphur atoms or by amino groups;

$R^2$ = alkylene, arylene, arylene alkylene or alkylene arylene having respectively 0 to 10 carbon atoms, these residues being able to be interrupted by oxygen and sulphur atoms or by amino or -NH-CO-O-groups;

a = 1, 2 or 3;

b = 0, 1 or 2;

c = 1, 2, 3, 4, 5 or 6;

d = 4 - a - b

a+b = 1, 2 or 3.

**2.** Silanes according to claim 1, **characterised in that** the unit with the index c or d represents a possibly substituted dioxolanone or dioxanone.

**3.** Silane according to claim 2, **characterised in that** the unit with the index c or d is

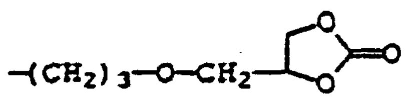

or

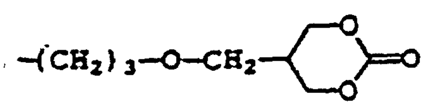

**4.** Method of manufacturing silanes of the general formula I,

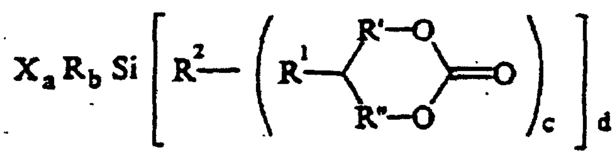

(I)

wherein the residues and the indices are the same or different and have the following meaning,

X = hydrogen, halogen, hydroxy, alkoxy, acyloxy, alkylcarbonyl, alkoxycarbonyl or $NR^3_2$; with $R^3$ = hydrogen, alkyl or aryl,

R = alkyl, alkenyl, aryl, alkylaryl or arylalkyl,

R' = alkylene, arylene, arylene alkylene or alkylene arylene having respectively 0 to 10 carbon atoms, these residues being able to be interrupted by oxygen and sulphur atoms or by amino groups,

R" = alkylene, arylene, arylene alkylene or alkylene arylene having respectively 1 to 10 carbon atoms, these residues being able to be interrupted by oxygen and sulphur atoms or by amino groups,

$R^1$ = alkylene, arylene, arylene alkylene or alkylene arylene having respectively 0 to 10 carbon atoms, these residues being able to be interrupted by oxygen and sulphur atoms or by amino groups,

$R^2$ = alkylene, arylene, arylene alkylene or alkylene arylene having respectively 0 to 10 carbon atoms, these residues being able to be interrupted by oxygen and sulphur atoms or by amino groups,

a= 1, 2 or 3,

b = 0, 1 or 2,

c = 1, 2, 3, 4, 5 or 6,

d = 4 - a - b,

a+b = 1, 2 or 3,

**characterised in that** a silane of the general formula V,

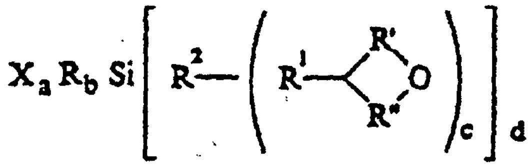

(V)

wherein the residues and indices have the:above-mentioned meaning, is subjected to carboxylation.

**5.** Method according to claim 4, **characterised in that** a possibly substituted silane of the formula V'

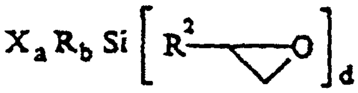

(V')

is used wherein the residues and indices are the same or different and have the meaning given in claim 4.

**6.** Method of manufacturing silanes of the general formula I',

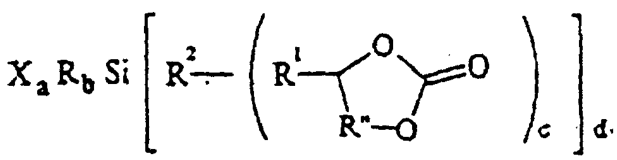

(I')

wherein the residues and indices are the same or different and have the following meaning:

| | |
|---|---|
| X = | hydrogen, halogen, hydroxy, alkoxy, acyloxy, alkylcarbonyl, alkoxycarbonyl or $NR^3_2$; with $R^3$ = hydrogen, alkyl or aryl, |
| R = | alkyl, alkenyl, aryl, alkylaryl or arylalkyl, |
| R" = | alkylene, arylene, arylene alkylene or alkylene arylene having respectively 1 to 10 carbon atoms, these residues being able to be interrupted by oxygen and sulphur atoms or by amino groups, |
| $R^1$ = | alkylene, arylene, arylene alkylene or alkylene arylene having respectively 0 to 10 carbon atoms, these residues being able to be interrupted by oxygen and sulphur atoms or by amino groups, |
| $R^2$ = | alkylene, arylene, arylene alkylene or alkylene arylene having respectively 0 to 10 carbon atoms, these residues being able to be interrupted by oxygen and sulphur atoms or by amino groups, |
| a = | 1, 2 or 3, |
| b = | 0, 1 or 2, |
| c = | 1, 2, 3, 4, 5 or 6, |
| d = | 4 - a - b, |
| a+b = | 1, 2 or 3, |

**characterised in that** a silane of the general formula VI,

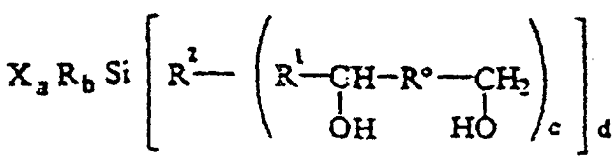

(VI)

wherein R° means alkylene, arylene, arylene alkylene or alkylene arylene having respectively 0 to 9 carbon atoms, these residues being able to be interrupted by oxygen and sulphur atoms or by amino groups, and wherein the

remaining residues and indices have the above-mentioned meaning, is converted with a carbonate of the general formula $R_4$-O-CO-O-$R^4$, wherein the residues $R^4$ are the same or different and mean alkyl, aryl, aryl alkylene or alkyl arylene having respectively 1 to 10 carbon atoms, these residues being able to be interrupted by oxygen and sulphur atoms or by amino groups.

**7.** Method according to claim 6, **characterised in that** a possibly substituted silane of the general formula VI'

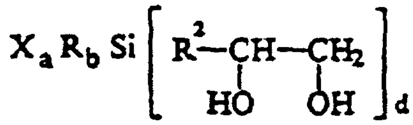

(VI')

is used wherein the residues and indices are the same or different and have the meaning given in claim 6.

**8.** Method of manufacturing silanes of the general formula I",

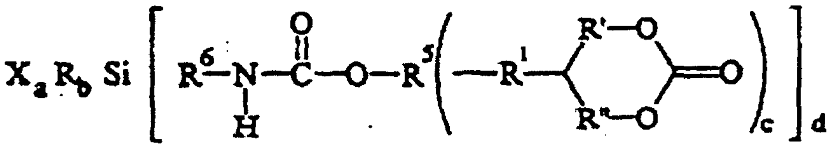

(I")

wherein the residues and indices are the same or different and have the following meaning,

X = hydrogen, halogen, hydroxy, alkoxy, acyloxy, alkylcarbonyl, alkoxycarbonyl or $NR^3_2$; with $R^3$ = hydrogen, alkyl or aryl,
R = alkyl, alkenyl, aryl, alkylaryl or arylalkyl,
R' = xalkylene, arylene, arylene alkylene or alkylene arylene having respectively 0 to 10 carbon atoms, these residues being able to be interrupted by oxygen and sulphur atoms or by amino groups,
R" = alkylene, arylene, arylene alkylene or alkylene arylene having respectively 1 to 10 carbon atoms, these residues being able to be interrupted by oxygen and sulphur atoms or by amino groups,
$R^1$ = alkylene, arylene, arylene alkylene or alkylene arylene having respectively 0 to 10 carbon atoms, these residues being able to be interrupted by oxygen and sulphur atoms or by amino groups,
$R^5$ = alkylene, arylene, arylene alkylene or alkylene arylene having respectively 0 to 8 carbon atoms, these residues being able to be interrupted by oxygen and sulphur atoms or by amino groups, and wherein the sum of the carbon atoms of residues $R^5$ and $R^6$ does not exceed 9,
$R^6$ = alkylene, arylene, arylene alkylene or alkylene arylene having respectively 1 to 8 carbon atoms, these residues being able to be interrupted by oxygen and sulphur atoms or by amino groups, and wherein the sum of the carbon atoms of the residues $R^5$ and $R^6$ does not exceed 9,
a = 1, 2, or 3,
b = 0, 1 or 2,
c = 1, 2, 3, 4, 5 or 6,
d = 4 - a - b,
a+b = 1, 2 or 3,

**characterised in that** a possibly substituted alcohol of the general formula VIII,

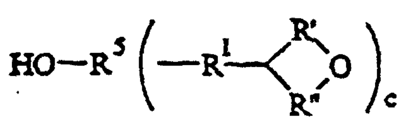

(VIII)

in which the residues and indices are the same or different and have the above-mentioned meaning, is subjected to carboxylation, and the reaction product is added to a silane of the general formula $X_aR_bSi(R^6\text{-NCO})_d$ wherein

the residues and indices are also the same or different and have the above-mentioned meaning.

**9.** Method according to claim 8, **characterised in that** an alcohol of the general formula VIII'

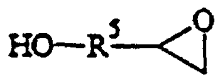

(VIII')

is used wherein the residue $R^5$ has the meaning given in claim 8.

**10.** Use of the silanes of the general formula I:

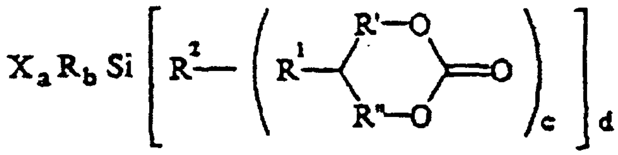

(I)

wherein the residues and indices are the same or different and have the following meaning,

X = hydrogen, halogen, hydroxy, alkoxy, acyloxy, alkylcarbonyl, alkoxycarbonyl or $NR^3_2$; with $R^3$ = hydrogen, alkyl or aryl,
R = alkyl, alkenyl, aryl, alkylaryl or arylalkyl,
R' = alkylene, arylene, arylene alkylene or alkylene arylene having respectively 0 to 10 carbon atoms, these residues being able to be interrupted by oxygen and sulphur atoms or by amino groups,
R" = alkylene, arylene, arylene alkylene or alkylene arylene having respectively 1 to 10 carbon atoms, these residues being able to be interrupted by oxygen and sulphur atoms or by amino groups,
$R^1$ = alkylene, arylene, arylene alkylene or alkylene arylene having respectively 0 to 10 carbon atoms, these residues being able to be interrupted by oxygen and sulphur atoms or by amino groups;
$R^2$ = alkylene, arylene, arylene alkylene or alkylene arylene having respectively 0 to 10 carbon atoms, these residues being able to be interrupted by oxygen and sulphur atoms or by amino or -NH-CO-O-groups,
a = 1, 2 or 3,
b = 0, 1 or 2,
c = 1, 2, 3, 4, 5 or 6,
d = 4 - a - b,
a+b = 1, 2 or 3,

to produce silicic acid polycondensates or silicic acid heteropolycondensates through hydrolytic condensation of one or more hydrolytically condensable compounds of silicon and possibly other elements from the group B, Al, P, Sn, Pb, transition metals, lanthanides and actinides, and/or precondensates derived from the above-mentioned compounds, possibly in the presence of a catalyst and/or a solvent, through the action of water or moisture, **characterised in that** 5 to 100 mole percent, on the basis of monomer compounds, of the hydrolytically condensable compounds are selected from silanes of the general formula I.

**11.** Use according to claim 10, **characterised in that,** as additional hydrolytically condensable compounds, compounds are used which can be polymerised in a radical and/or ionic and/or covalent-nucleophilic manner, possibly in a precondensed form.

**12.** Use according to claim 10 or 11, **characterised in that,** as additional condensable compounds of silicon, one or more compounds of the general formula II, possibly in precondensed form, are used,

$$R_a(R''Z')_bSiX_{4-(a+b)} \quad (II)$$

wherein the residues R, R" and Z' are the same or different and have the following meaning:

R = alkyl, alkenyl, aryl, alkylaryl or arylalkyl,
R" = alkylene or alkenylene, these residues being able to be interrupted by oxygen or sulphur atoms or -NH- groups,
X = hydrogen, halogen, hydroxy, alkoxy, acyloxy, alkylcarbonyl, alkoxycarbonyl or $NR^3_2$, with R' = hydrogen, alkyl or aryl,
Z' = halogen or one of the following groups, possibly substituted, amino, amide, aldehyde, alkylcarbonyl, carboxy, mercapto, cyano, alkoxy, alkoxycarbonyl, sulphonic acid, phosphoric acid, acryloxy, methacryloxy, epoxy or vinyl,
a = 0, 1, 2, or 3,
b = 0, 1, 2, or 3, with a+b = 1, 2 or 3.

**13.** Use according to one or more of claims 10 to 12,
**characterised in that,** as additional hydrolytically condensable compounds of silicon, one or more compounds of the general formula III, possibly in precondensed form, are used,

$$Y_n\ Si\ X_m\ R_{4-(n+m)} \qquad (III)$$

wherein the residues X, Y and R are the same or different and have the following meaning:

R = alkyl, alkenyl, aryl, alkylaryl or arylalkyl,
X = hydrogen, halogen, hydroxy, alkoxy, acyloxy, alkylcarbonyl, alkoxycarbonyl or $NR^3_2$, with $R^3$ = hydrogen, alkyl or aryl,
Y = a substituent which contains a substituted or non-substituted 1,4,6-trioxaspiro-[4,4]-nonane residue,
n = 1, 2 or 3,
m = 1, 2 or 3, with n+m = 4.

**14.** Use according to one or more of claims 10 to 13,
**characterised in that,** as additional hydrolytically condensable compounds of silicon, one or more compounds of the general formula IV, possibly in precondensed form, are used,

$$\{X_n R_k Si[(R^2 A)_1]_{4-(n+k)}\} x^8 \qquad (IV)$$

wherein the residues A, R, $R^2$ and X are the same or different and have the following meaning:

A = O, S, PR', POR', NHC(O)O or NHC(O)NR', with R' = hydrogen, alkyl or aryl,
B = straight-chain or branched organic residue which is derived from a B' compound having at least one (for 1 = 1 and A = NHC(O)O or NHC(O)NR') or at least two C=C double bonds and 5 to 50 carbon atoms, with R' = hydrogen, alkyl or aryl,
R = alkyl, alkenyl, aryl, alkylaryl or arylalkyl,
$R_2$ = alkylene, arylene or alkylene arylene,
X = hydrogen, halogen, hydroxy, alkoxy, acyloxy, alkylcarbonyl, alkoxycarbonyl or $NR^3_2$, with $R^3$ = hydrogen, alkyl or aryl,
n = 1, 2 or 3,
k = 0, 1 or 2,
l = 0 or 1,
x = a whole number, the maximum value of which corresponds to the number of double bonds in the B' compound minus 1, or is equal to the number of double bonds in the B' compound when l = 1 and A stands for NHC(O)O or NHC(O)NR'.

**15.** Use according to claim 14, **characterised in that** a compound of the general formula IV is used in which the residue B is derived from a substituted or non-substituted B' compound with two or more acrylate and/or methacrylate groups.

**16.** Use according to one or more of claims 10 to 15,
**characterised in that,** as additional hydrolytically condensable components are used one or more aluminium, titanium or zirconium compounds, soluble in the reaction medium and possibly in precondensed form, of the general formulae:

$$AlR^{o}{}_{3} \quad \text{or} \quad M X_y R_z$$

wherein M means titanium or zirconium, the residues X, R° and R are the same or different, R° represents halogen, hydroxy, alkoxy or acyloxy, y is a whole number from 1 to 4, especially 2 to 4, z stands for 0, 1, 2 or 3, preferably for 0, 1 or 2 and X and R are defined as in the case of the general formula I.

**17.** Use according to one or more of claims 10 to 16,
**characterised in that** one or more initiators are possibly added to the polycondensate and the polycondensate is hardened in an ionic and/or radical and/or covalent-nucleophilic and/or thermal and/or photochemical and/or redox-induced manner.

**18.** Use according to one or more of claims 10 to 17,
**characterised in that,** before polymerisation, one or more components which can be polymerised in a radical and/or ionic and/or covalent-nucleophilic manner are added to the polycondensate.

**19.** Use of the silanes of the general formula I,

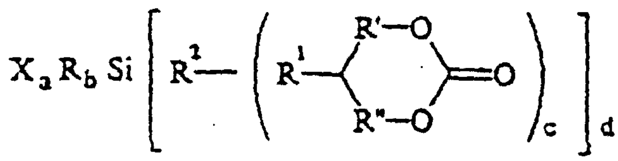

(I)

wherein the residues and indices are the same or different and have the following meaning,

- X = hydrogen, halogen, hydroxy, alkoxy, acyloxy, alkylcarbonyl, alkoxycarbonyl or $NR^3{}_2$; with $R^3$ = hydrogen, alkyl or aryl,
- R = alkyl, alkenyl, aryl, alkylaryl or arylalkyl,
- R' = alkylene, arylene, arylene alkylene or alkylene arylene having respectively 0 to 10 carbon atoms, these residues being able to be interrupted by oxygen and sulphur atoms or by amino groups,
- R" = alkylene, arylene, arylene alkylene or alkylene arylene having respectively 1 to 10 carbon atoms, these residues being able to be interrupted by oxygen and sulphur atoms or by amino groups,
- $R^1$ = alkylene, arylene, arylene alkylene or alkylene arylene having respectively 0 to 10 carbon atoms, these residues being able to be interrupted by oxygen and sulphur atoms or by amino groups,
- $R^2$ = alkylene, arylene, arylene alkylene or alkylene arylene having respectively 0 to 10 carbon atoms, these residues being able to be interrupted by oxygen and sulphur atoms or by amino or -NH-CO-O-groups,
- a = 1, 2 or 3,
- b = 0, 1 or 2,
- c = 1, 2, 3, 4, 5 or 6,
- d = 4 - a - b,
- a+b = 1, 2 or 3,

to produce polymers through ionic and/or covalent-nucleophilic polymerisation of one or more compounds which can be polymerised in an ionic and/or covalent-nucleophilic manner, and possibly through radical polymerisation of one or more compounds which can be polymerised radically, possibly through the action of heat or electromagnetic radiation and possibly in the presence of one or more initiators and/or a solvent,
**characterised in that** 5 to 100 mole percent, on the basis of monomer compounds, are selected from silanes of the general formula I.

**20.** Use according to claim 19, **characterised in that,** as additional ionically polymerisable compounds, one or more silicon compounds of the general formula III are used,

$$Y_n\ Si\ X_m\ R_{4-(n+m)} \qquad (III)$$

wherein the residues X, Y and R are the same or different and have the following meaning:

R = alkyl, alkenyl, aryl, alkylaryl or arylalkyl,
X = hydrogen, halogen, hydroxy, alkoxy, acyloxy, alkylcarbonyl, alkoxycarbonyl or $NR^3_2$, with $R^3$ = hydrogen, alkyl or aryl,
Y = a substituent which contains a substituted or non-substituted 1,4,6-trioxaspiro-[4,4]-nonane residue,
n = 1, 2 or 3,
m = 1, 2 or 3, with n+m = 4.

**21.** Use according to claim 19 or 20, **characterised in that** as the additional ionically polymerisable compounds are used one or more spiroorthoesters, spiroorthocarbonates, bicyclic spiroorthoesters, methacryloyl-spiroorthoesters, mono- or oligoepoxides.

**22.** Use according to one or more of claims 19 to 21,
**characterised in that** as the radically polymerisable compounds, one or more silicon compounds of the general formula IV are used,

$$\{X_nR_kSi[(R^2A)_1]_{4-(n+k)}\}_x{}^B \qquad (IV)$$

wherein the residues A, R, $R^2$ and X are the same or different and A, R, $R^2$, X, k, l, n and x have the meaning given in claim 14.

**23.** Use according to one or more of claims 19 to 22,
**characterised in that** the polymer is hydrolytically condensed, possibly in the presence of additional hydrolytically condensable compounds of silicon and possibly other elements from the group B, Al, P Sn, Pb, transition metals, lanthanides and actinides, and/or precondensates derived from the above-mentioned compounds, through the action of water or moisture, possibly in the presence of a catalyst and/or a solvent.

**24.** Use according to claim 23, **characterised in that,** as additional condensable compounds of silicon, one or more compounds of the general formula II, possibly in precondensed form, are used,

$$R_a(R''Z')_bSiX_{4-(a+b)} \qquad (II)$$

wherein the residues R, R'' and Z' are the same or different, and R, R'', Z' a and b have the meaning given in claim 12.

**25.** Use of the silanes according to one or more of claims 1 to 3 for addition to primary or secondary amines.

## Revendications

**1.** Silanes hydrolysables et polymérisables de formule générale I,

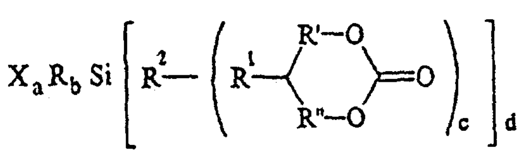

(I)

dans laquelle les radicaux et indices sont identiques ou différents et ont les significations suivantes :

X = un hydrogène, ou halogène, ou un hydroxy, alcoxy, acyloxy, alkylcarbonyle, alcoxycarbonyle ou $NR^3_2$, $R^3$ étant un hydrogène ou un alkyle ou aryle ;
R = un alkyle, alcényle, aryle, alkylaryle ou arylalkyle;
R' = un alkylène, arylène, arylène-alkylène ou alkylène-arylène ayant chacun de 0 à 10 atomes de carbone pour c+d>2 et ayant chacun de 1 à 10 atomes de carbone pour c+d=2, ces radicaux pouvant être interrompus par des atomes d'oxygène ou de soufre ou par des groupes amino ;
R" = un alkylène, arylène, arylène-alkylène ou alkylène-arylène ayant chacun de 1 à 10 atomes de carbone, ces radicaux pouvant être interrompus par des atomes d'oxygène ou de soufre ou par des groupes amino ;
$R^1$ = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ;
$R^2$ = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ou -NH-CO-O-;
a = 1, 2 ou 3 ;
b = 0, 1 ou 2 ;
c = 1, 2, 3, 4, 5 ou 6 ;
d = 4-a-b ;
a+b = 1, 2 ou 3.

**2.** Silanes selon la revendication 1, caractérisés en ce que le motif portant l'indice c ou d représente une dioxolanone ou dioxanone éventuellement substituée.

**3.** Silanes selon la revendication 2, caractérisés en ce que le motif portant l'indice c ou d est

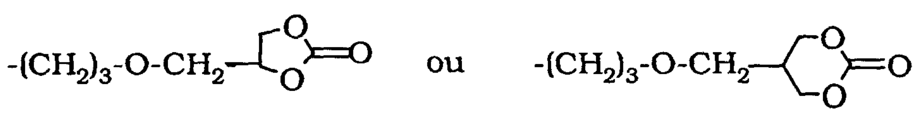

**4.** Procédé pour la préparation de silanes de formule générale I,

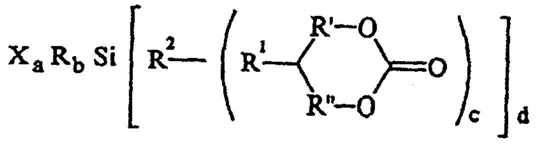

(I)

dans laquelle les radicaux et indices sont identiques ou différents et ont les significations suivantes :

X = un hydrogène ou halogène, ou un hydroxy, alcoxy, acyloxy, alkylcarbonyle, alcoxycarbonyle ou $NR^3_2$, $R^3$ étant un hydrogène ou un alkyle ou aryle ;
R = un alkyle, alcényle, aryle, alkylaryle ou arylalkyle ;
R' = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ;
R" = un alkylène, arylène, arylène-alkylène ou alkylène-arylène ayant chacun de 1 à 10 atomes de carbone, ces radicaux pouvant être interrompus par des atomes d'oxygène ou de soufre ou par des groupes amino ;
$R^1$ = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ;
$R^2$ = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ;
a= 1, 2 ou 3 ;

b = 0, 1 ou 2 ;
c = 1, 2, 3, 4, 5 ou 6 ;
d = 4-a-b ;
a+b = 1, 2 ou 3,

caractérisé en ce qu'
on soumet à une carboxylation un silane de formule générale V

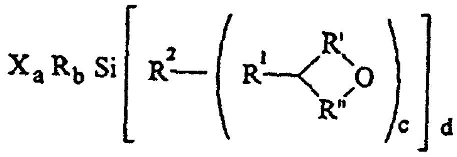

(V)

dans laquelle les radicaux et indices ont les significations données plus haut.

**5.** Procédé selon la revendication 4,
caractérisé en ce qu'
on utilise un silane éventuellement substitué de formule V'

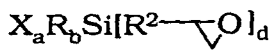

(V')

dans laquelle les radicaux et indices sont identiques ou différents et ont les significations données dans la revendication 4.

**6.** Procédé pour la préparation de silanes de formule générale I'

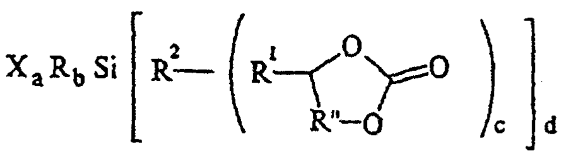

(I')

dans laquelle les radicaux et indices sont identiques ou différents et ont les significations suivantes :

X = un hydrogène, ou halogène, ou un hydroxy, alcoxy, acyloxy, alkylcarbonyle, alcoxycarbonyle ou $NR^3{}_2$, $R^3$ étant un hydrogène ou un alkyle ou aryle ;
R = un alkyle, alcényle, aryle, alkylaryle ou arylalkyle ;
R" = un alkylène, arylène, arylène-alkylène ou alkylène-arylène ayant chacun de 1 à 10 atomes de carbone, ces radicaux pouvant être interrompus par des atomes d'oxygène ou de soufre ou par des groupes amino ;
$R^1$ = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ;
$R^2$ = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ;
a= 1, 2 ou 3 ;
b = 0, 1 ou 2 ;
c = 1, 2, 3, 4, 5 ou 6;
d = 4-a-b ;
a+b = 1, 2 ou 3,

caractérisé en ce qu'
on fait réagir un silane de formule générale VI,

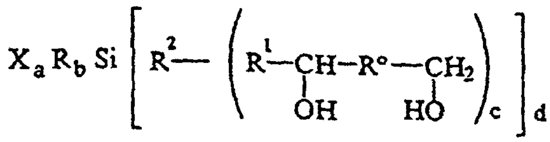

(VI)

dans laquelle $R^o$ représente un alkylène, arylène, arylène-alkylène ou alkylène-arylène ayant chacun de 0 à 9 atomes de carbone, ces radicaux pouvant être interrompus par des atomes d'oxygène ou de soufre ou par des groupes amino, et dans laquelle les autres radicaux et indices ont les significations données plus haut,
avec un carbonate de formule générale $R^4$-O-CO-O-$R^4$, dans laquelle les radicaux $R^4$ sont identiques ou différents et peuvent être chacun un alkyle, aryle, arylalkylène ou alkylarylène ayant chacun de 1 à 10 atomes de carbone, ces radicaux pouvant être interrompus par des atomes d'oxygène ou de soufre ou par des groupes amino.

**7.** Procédé selon la revendication 6,
caractérisé en ce qu' on utilise un silane éventuellement substitué, de formule générale VI'

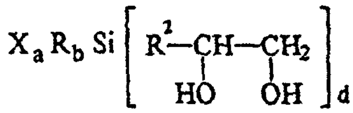

(VI')

dans laquelle les radicaux et indices sont identiques ou différents et ont les significations données dans la revendication 6.

**8.** Procédé pour la préparation de silanes de formule générale I"

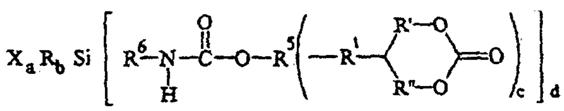

(I")

dans laquelle les radicaux et indices sont identiques ou différents et ont les significations suivantes :

| | |
|---|---|
| X = | un hydrogène ou halogène, ou un hydroxy, alcoxy, acyloxy, alkylcarbonyle, alcoxycarbonyle ou $NR^3_2$, $R^3$ étant un hydrogène ou un alkyle ou aryle ; |
| R = | un alkyle, alcényle, aryle, alkylaryle ou arylalkyle ; |
| R' = | un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ; |
| R" = | un alkylène, arylène, arylène-alkylène ou alkylène-arylène ayant chacun de 1 à 10 atomes de carbone, ces radicaux pouvant être interrompus par des atomes d'oxygène ou de soufre ou par des groupes amino ; |
| $R^1$ = | un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ; |
| $R^5$ = | un alkylène, arylène, arylène-alkylène ou alkylène-arylène ayant chacun de 0 à 8 atomes de carbone, ces radicaux pouvant être interrompus par des atomes d'oxygène ou de soufre ou par des groupes amino, et la somme des atomes de carbone des radicaux $R^5$ et $R^6$ n'excédant pas 9 ; |
| $R^6$ = | un alkylène, arylène, arylène-alkylène ou alkylène-arylène ayant chacun de 1 à 8 atomes de carbone, ces radicaux pouvant être interrompus par des atomes d'oxygène ou de soufre ou par des groupes amino, et la somme des atomes de carbone des radicaux $R^5$ et $R^6$ n'excédant pas 9 ; |
| a= | 1, 2 ou 3 ; |
| b = | 0, 1 ou 2 ; |
| c= | 1, 2, 3, 4, 5 ou 6; |
| d = | 4-a-b ; |
| a+b = | 1, 2 ou 3, |

caractérisé en ce qu'

on soumet à une carboxylation un alcool éventuellement substitué de formule générale VIII,

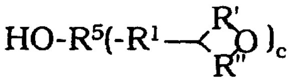

(VIII)

dans laquelle les radicaux et indices sont identiques ou différents et ont les significations données plus haut, et le produit de réaction est fixé par addition à un silane de formule générale $X_aR_bSi(R^6\text{-NCO})_d$, dans laquelle les radicaux et indices sont de même identiques ou différents et ont les significations données plus haut.

**9.** Procédé selon la revendication 8,
caractérisé en ce qu'
on utilise un alcool de formule générale VIII'

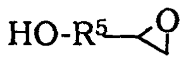

(VIII')

dans laquelle le radical $R^5$ a la signification donnée dans la revendication 8.

**10.** Utilisation des silanes de formule générale I

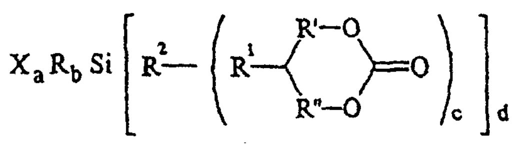

(I)

dans laquelle les radicaux et indices sont identiques ou différents et ont les significations suivantes

X = un hydrogène ou halogène, ou un hydroxy, alcoxy, acyloxy, alkylcarbonyle, alcoxycarbonyle ou $NR^3_2$, $R^3$ étant un hydrogène ou un alkyle ou aryle ;
R = un alkyle, alcényle, aryle, alkylaryle ou arylalkyle ;
R' = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ;
R'' = un alkylène, arylène, arylène-alkylène ou alkylène-arylène ayant chacun de 1 à 10 atomes de carbone, ces radicaux pouvant être interrompus par des atomes d'oxygène ou de soufre ou par des groupes amino ;
$R^1$ = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ;
$R^2$ = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ou -NH-CO-O- ;
a= 1, 2 ou 3 ;
b = 0, 1 ou 2 ;
c = 1, 2, 3, 4, 5 ou 6 ;
d = 4-a-b ;
a+b = 1, 2 ou 3.

pour la préparation de polycondensats d'acide silicique ou d'hétéropolycondensats d'acide silicique par condensation par hydrolyse d'un ou plusieurs composés du silicium aptes à la condensation par hydrolyse et éventuellement d'autres éléments appartenant au groupe B, Al, P, Sn, Pb, des métaux de transition, des lanthanides et des actinides, et/ou de précondensats dérivés des composés cités plus haut, éventuellement en présence d'un catalyseur et/ou d'un solvant, sous l'effet de l'eau ou d'humidité,
caractérisée en ce qu'
on choisit 5 à 100 % en moles, sur la base des composés monomères, des composés condensables par hydrolyse à partir des silanes de formule générale I.

**11.** Utilisation selon la revendication 10,
caractérisée en ce que
comme autres composés condensables par hydrolyse, on utilise des composés aptes à la polymérisation radicalaire et/ou ionique et/ou covalente-nucléophile, essentiellement sous forme précondensée.

**12.** Utilisation selon la revendication 10 ou 11,
caractérisée en ce que
comme autres composés du silicium condensables par hydrolyse, on utilise un ou plusieurs composés de formule générale II, éventuellement sous forme précondensée,

$$R_a(R''Z')_bSiX_{4-(a+b)} \qquad (II)$$

formule dans laquelle les radicaux R, R" et Z' sont identiques ou différents et ont les significations suivantes :

- R = un alkyle, alcényle, aryle, alkylaryle ou arylalkyle ;
- R" = un alkylène ou alcénylène, ces radicaux pouvant être interrompus par des atomes d'oxygène ou de soufre ou par des groupes -NH- ;
- X = un hydrogène ou halogène, ou un hydroxy, alcoxy, acyloxy, alkylcarbonyle, alcoxycarbonyle ou $NR^3_2$, $R^3$ étant un hydrogène ou un alkyle ou aryle,
- Z' = un halogène ou un groupe amino, amido, aldéhyde, alkylcarbonyle, carboxy, mercapto, cyano, alcoxy, alcoxycarbonyle, sulfoacide, phosphoacide, acryloxy, méthacryloxy, époxy ou vinyle;
- a = 0, 1, 2 ou 3 ;
- b = 0, 1, 2 ou 3, avec a+b = 1, 2 ou 3.

**13.** Utilisation selon une ou plusieurs des revendications 10 à 12,
caractérisée en ce que
comme autres composés du silicium condensables par hydrolyse, on utilise un ou plusieurs composés de formule générale III, éventuellement sous forme précondensée,

$$Y_nSiX_mR_{4-(n+m)} \qquad (III)$$

formule dans laquelle les, radicaux X, Y et R sont identiques ou différents et ont les significations suivantes :

- R = un alkyle, alcényle, aryle, alkylaryle ou arylalkyle ;
- X = un hydrogène ou halogène, ou un hydroxy, alcoxy, acyloxy, alkylcarbonyle, alcoxycarbonyle ou $NR^3_2$, $R^3$ étant un hydrogène ou un alkyle ou aryle ;
- Y = un substituant qui contient un radical 1,4,6-trioxaspiro-[4,4]-nonane substitué ou non substitué ;
- n= 1, 2 ou 3;
- m = 1, 2 ou 3, avec $m+n \leq 4$.

**14.** Utilisation selon une ou plusieurs des revendications 10 à 13,
caractérisée en ce que
comme autres composés du silicium condensables par hydrolyse, on utilise un ou plusieurs composés de formule générale IV, éventuellement sous forme précondensée,

$$\{X_nR_kSi[(R^2A)_1]_{4-(n+k)}\}_xB \qquad (IV)$$

formule dans laquelle les radicaux A, R, $R^2$ et X sont identiques ou différents et ont les significations suivantes :

- A = O, S, PR', POR', NHC(O)O ou NHC(O)NR', R' étant un hydrogène ou un alkyle ou aryle ;
- B = un radical organique à chaîne droite ou ramifié, qui est dérivé d'un composé B' comportant au moins une (pour l=1 et A = NHC(O)O ou NHC(O)NR') ou au moins deux doubles liaisons C=C et ayant de 5 à 50 atomes de carbone, R' étant un hydrogène ou un alkyle ou aryle ;
- R = un alkyle, alcényle, aryle, alkylaryle ou arylalkyle ;

$R^2$= un alkylène, arylène ou alkylène-arylène,
X = un hydrogène ou halogène, ou un hydroxy, alcoxy, acyloxy, alkylcarbonyle, alcoxycarbonyle ou $NR^3_2$, $R^3$ étant un hydrogène ou un alkyle ou aryle ;
n= 1, 2 ou 3 ;
k = 0, 1 ou 2 ;
l = 0 ou 1 ;
x = un nombre entier dont la valeur maximale correspond au nombre des doubles liaisons dans le composé B' moins 1, ou est égal au nombre de doubles liaisons dans le composé B' lorsque l = 1 et A représente NHC(O)O ou NHC(O)NR'.

**15.** Utilisation selon la revendication 14, caractérisée en ce qu' on utilise un composé de formule générale IV, dans lequel le radical B dérive d'un composé B' substitué ou non substitué, comportant deux ou plus de deux groupes acrylate et/ou méthacrylate.

**16.** Utilisation selon une ou plusieurs des revendications 10 à 15, caractérisée en ce que comme autres composants condensables par hydrolyse, on utilise un ou plusieurs composés à base d'aluminium, de titane ou de zirconium, solubles dans le mélange réactionnel, éventuellement sous forme précondensée, de formule générale

$$AlR^{o}_{3} \quad \text{ou} \quad MX_yR_z$$

formules dans lesquelles M représente le titane ou le zirconium, les radicaux X, $R^o$ et R sont identiques ou différents, $R^o$ représente un halogène ou un hydroxy, alcoxy ou acyloxy, y est un nombre entier allant de 1 à 4, en particulier de 2 à 4, z représente 0, 1, 2 ou 3, de préférence 0, 1 ou 2, et X et R sont tels que définis dans le cas de la formule générale I.

**17.** Utilisation selon une ou plusieurs des revendications 10 à 16, caractérisée en ce qu' on ajoute éventuellement un ou plusieurs amorceurs au polycondensat et le polycondensat est durci par voie radicalaire et/ou ionique et/ou covalente-nucléophile et/ou thermique et/ou photochimique et/ou par induction rédox.

**18.** Utilisation selon une ou plusieurs des revendications 10 à 17, caractérisée en ce qu' on ajoute au polycondensat, avant la polymérisation, un ou plusieurs composants aptes à la polymérisation radicalaire et/ou ionique et/ou covalente-nucléophile.

**19.** Utilisation des silanes de formule générale I

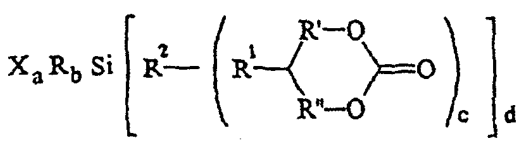

(I)

dans laquelle les radicaux et indices sont identiques ou différents et ont les significations suivantes :

X = un hydrogène ou halogène, ou un hydroxy, alcoxy, acyloxy, alkylcarbonyle, alcoxycarbonyle ou $NR^3_2$, $R^3$ étant un hydrogène ou un alkyle ou aryle ;
R = un alkyle, alcényle, aryle, alkylaryle ou arylalkyle ;
R' = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ;
R" = un alkylène, arylène, arylène-alkylène ou alkylène-arylène ayant chacun de 1 à 10 atomes de carbone, ces radicaux pouvant être interrompus par des atomes d'oxygène ou de soufre ou par des groupes amino ;

$R^1$ = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ;
$R^2$ = un alkylène, arylène, arylène-alkylène ou alkylène-arylène ayant chacun de 0 à 10 atomes de carbone, ces radicaux pouvant être interrompus par des atomes d'oxygène ou de soufre ou par des groupes amino ou -NH-CO-O- ;
a= 1, 2 ou 3 ;
b = 0, 1 ou 2 ;
c = 1, 2, 3, 4, 5 ou 6;
d = 4-a-b ;
a+b= 1, 2 ou 3.

pour la préparation de polymères par polymérisation ionique et/ou covalente/nucléophile d'un ou plusieurs composés aptes à la polymérisation ionique ou covalente/nucléophile et éventuellement par polymérisation radicalaire d'un ou plusieurs composés aptes à la polymérisation radicalaire, éventuellement sous l'effet de la chaleur ou d'un rayonnement électromagnétique et éventuellement en présence d'un ou plusieurs amorceurs et/ou d'un solvant, caractérisée en ce qu'
on choisit 5 à 100 % en moles, sur la base des composés monomères, de silanes de formule générale I.

**20.** Utilisation selon la revendication 19,
caractérisée en ce que
comme autres composés polymérisables par voie ionique, on utilise un ou plusieurs composés du silicium de formule générale III

$$Y_nSiX_mR_{4-(n+m)} \quad \text{(III)}$$

formule dans laquelle les radicaux X, Y et R sont identiques ou différents et ont les significations suivantes :

R = un alkyle, alcényle, aryle, alkylaryle ou arylalkyle ;
X = un hydrogène, ou halogène, ou un hydroxy, alcoxy, acyloxy, alkylcarbonyle, alcoxycarbonyle ou $NR^3_2$, $R^3$ étant un hydrogène ou un alkyle ou aryle ;
Y = un substituant qui contient un radical 1,4,6-trioxaspiro-[4,4]-nonane substitué ou non substitué ;
n = 1, 2 ou 3 ;
m = 1, 2 ou 3, avec $m+n \leq 4$.

**21.** Utilisation selon la revendication 19 ou 20,
caractérisée en ce que
comme autres composés aptes à la polymérisation ionique, on utilise un ou plusieurs spiro-orthoesters, spiro-orthocarbonates, spiro-orthoesters bicycliques, méthacryloyl-spiro-orthoesters, mono- ou oligo-époxydés.

**22.** Utilisation selon une ou plusieurs des revendications 19 à 21,
caractérisée en ce que
comme composés aptes à la polymérisation radicalaire, on utilise un ou plusieurs composés du silicium de formule générale IV

$$\{X_nR_kSi[(R^2A)_l]_{4-(n+k)}\}_xB \quad \text{(IV)}$$

dans laquelle les radicaux A, R, $R^2$ et X sont identiques ou différents et A, R, $R^2$, X, k, l, n et x ont les significations données dans la revendication 14.

**23.** Utilisation selon une ou plusieurs des revendications 19 à 22,
caractérisée en ce qu'
on condense par hydrolyse le polymère éventuellement en présence d'autres composés du silicium aptes à la condensation par hydrolyse et éventuellement d'autres éléments appartenant au groupe B, Al, P, Sn, Pb, des métaux de transition, des lanthanides et des actinides, et/ou de précondensats dérivés des composés cités plus haut, sous l'effet de l'eau ou d'humidité, éventuellement en présence d'un catalyseur et/ou d'un solvant.

**24.** Utilisation selon la revendication 23,
caractérisée en ce que
comme autres composés condensables du silicium, on utilise un ou plusieurs composés de formule générale II, éventuellement sous forme précondensée,

$$R_a(R''Z')_bSiX_{4-(a+b)} \quad \text{(II)}$$

formule dans laquelle les radicaux R, R" et Z' sont identiques ou différents et R, R", Z', a et b ont les significations données dans la revendication 12.

**25.** Utilisation des silanes selon une ou plusieurs des revendications 1 à 3, pour la fixation par addition sur des amines primaires ou secondaires.